# EUROPEAN PATENT SPECIFICATION

(11) **EP 3 405 030 B1**
(45) Date of publication and mention of the grant of the patent: **04.11.2020**
(21) Application number: 17700462.9
(22) Date of filing: 17.01.2017
(51) Int. Cl.: A01N 25/28, A01N 37/40, A01N 43/50, A01P 13/00

(54) **BIODEGRADABLE POLYESTER CAPSULES COMPRISING AN AQUEOUS CORE AND A PESTICIDE**
BIOLOGISCH ABBAUBARE POLYESTERKAPSELN MIT WÄSSRIGEM KERN UND EINEM PESTIZID
CAPSULES DE POLYESTER BIODÉGRADABLE COMPRENANT UN NOYAU AQUEUX ET UN PESTICIDE

(30) Priority: 22.01.2016 EP 16152354
(43) Date of publication of application: 28.11.2018
(73) Proprietor: BASF SE, 67056 Ludwigshafen am Rhein (DE)
(72) Inventor: BURAKOWSKA-MEISE, Ewelina, 67056 Ludwigshafen (DE); KLIMOV, Evgueni, 67117 Limburgerhof (DE); MECFEL-MARCZEWSKI, Joanna, 67117 Limburgerhof (DE); BRATZ, Matthias, 67117 Limburgerhof (DE)
(74) Representative: BASF IP Association
(86) International application number: PCT/EP2017/050905
(87) International publication number: WO 2017/125395

(56) References cited:
- EP-A1- 0 517 669
- EP-A2- 0 148 169
- WO-A2-2008/132067

## Description

The present invention relates to microcapsules comprising a capsule shell, and a capsule core, wherein the capsule shell comprises a polyester, and at least 10 wt% of water based on the total weight of the capsule core, wherein the capsule core comprises a water-soluble salt of dicamba selected from the sodium salt of dicamba and ammonium salts of dicamba. wherein the salt of dicamba has a water-solubility of at least 10 g/l at 25 ° C. The invention also relates to a process for manufacturing said microcapsules, comprising the steps of preparing an inverse emulsion with an aqueous dispersed phase, and a hydrophobic continuous phase, wherein the aqueous dispersed phase comprises an alcohol selected from diols, and polyols, and the salt of dicamba in dissolved form; and subsequently adding an acid-component selected from divalent, and multivalent carboxylic acids, and acid halides, acid esters, acid thioesters, and acid anhydrides thereof. The invention further relates to a method of controlling undesired insect or mite attack, and/or undesired vegetation, and/or for regulating the growth of plants, wherein said microcapsules, are allowed to act on the respective pests, their environment, or the crop plants to be protected from the respective pest, on the soil, and/or on the crop plants, and/or on their environment; to plant propagation materials comprising said capsules; and to a use of said microcapsules for reducing the volatility, or for reducing the leaching behavior of the pesticide.

Formulation of pesticides is an ongoing challenge in agrochemical industry. Due to stricter regulatory stipulations, the formulation can have a significant impact on the marketability of a crop protection agent.

WO 2008/132067 A2 discloses a microcapsules comprising a polyester shell and a capsule core comprising at least one polar solvent such as water and at least one active such as dicamba.

EP 0 517 669 A1 discloses microcapsules comprising a polyester shell, a non-aqueous solvent and dicamba acid, or salts.

EP 0 148 169 A2 discloses microcapsules having polyester shell and comprising potassium salt of dicamba and at least 10 wt.% of water.

One typical problem to be addressed is the evaporation of volatile pesticides, which usually causes undesired off-target effects, higher application rates of the pesticides, a high risk assessment for the user, and short effective treatment periods. Another problem is leaching of the pesticide caused by natural, or artificial irrigation, which results in contamination of fresh ground water, adverse effects on soil organisms, as well as again higher application rates and short effective treatment periods.

A further objective is to decrease human health risks during handling of agrochemcals, and spraying of tank mixes; a reduced amount of organic solvents in the agrochemical formulations, as well as biodegradability of at least the major formulation compounds. These problems and objectives were successfully addressed by the microcapsules of claim 1.

The microcapsules comprise a capsule core and a capsule shell. The capsule core usually contains at least 50 wt%, preferably at least 70 wt%, most preferably at least 90 wt%, and in particular at least 95 wt% of a mixture of water and pesticide, based on the total weight of all components of the capsule core.

In one embodiment, the capsule core comprises less than 10 wt% of hydrophilic compounds other than pesticides and water, preferably less than 5 wt%, and in particular less than 1 wt%, based on the total weight of all compounds in the capsule core.

Hydrophilic compounds may be hydrophilic organic solvents, such as acetone, gamma-butyrolactone, N-methyl-2-pyrrolidone, nitromethane, dimethylformamide, dimethyl propylene urea, sulfolane, dimethylcarbonate, dieethylcarbonate, acetonitrile, dimethylsulfoxide, methanol, ethanol, propanol, isopropanol, chloromethane, dichloromethane, chloroform, pyrrolidone, ethylene glycol, propylene glycol, and glycerol, or sugars, such as glucose, fructose, saccharose, maltose, and sorbitol.

Usually, the capsule core does also not contain enzymes, such as lipases, cutinases, or esterases.

The capsule core may contain an auxiliary selected from surfactants, such as anionic surfactants, nonionic surfactants, and cationic surfactants, thickeners, bactericides, and colorants as defined hereinafter below. The concentration of the auxiliary in the capsule core is usually up to 10 wt%, preferably up to 5 wt%, and in particular up to 1 wt%, based on the total weight of the compounds of the capsule core.

The capsule core contains at least 10 wt% of water, preferably at least 30 wt%, most preferably at least 50 wt%, and in particular at least 70 wt% based on the total weight of all components of the capsule core.

The weight ratio of the water in the capsule core to the pesticide in the capsule core generally ranges from 20:1 to 1:5, preferably 10:1 to 1:3, most preferably 10:1 to 1:2, and in particular 5:1 to 1:2.

The capsule core further contains a salt of dicamba. The salt of dicamba a solubility in water at 25 ° C of at least 10 g/l.

In one embodiment, the salt of dicamba is the sodium salt of dicamba. In another embodiment, the salt of dicamba is an ammonium salt of dicamba, such as the methyl ammonium salt, the dimethyl ammonium salt, the triethyl ammonium salt, the triethanol ammonium salt, the diethyl ammonium salt, the diethanol ammonium salt, the isopropyl ammonium salt, the diisopropylethyl ammonium salt, the 2-(2-ammonium ethoxy)ethanol salt, the diglycolammonium salt, the diethylentriammonium salt, the N,N-bis-(3-aminopropyl)methylammonium salt, or the ammonium salt. In one embodiment, the salt of dicamba the sodium, triethanol ammonium, diethanol ammonium, isopropyl ammonium, 2-(2-ammonium ethoxy)ethanol, diglycolammonium, or N,N-bis-(3-aminopropyl)methylammonium salt. In another embodiment, the salt is the sodium, triethanol ammonium, isopropyl ammonium, diglycolammonium, or N,N-bis-(3-aminopropyl)methylammonium salt. In another embodiment, the salt is in the triethanol ammonium, isopropyl ammonium, diglycolammonium, or N,N-bis-(3-aminopropyl)methylammonium salt. In another embodiment, the salt is the diglycolammonium, or N,N-bis-(3-aminopropyl)methylammonium salt. In another embodiment, the salt is the diglycolammonium salt. In another embodiment, the salt is the isopropyl ammonium salt. The pesticide is usually present in the capsule core in dissolved, or dispersed form, preferably in dissolved form.

Usually, the capsule core comprises from 1 to 90 wt%, preferably from 5 to 80 wt%, especially preferably from 10 to 50 wt% of the salt of dicamba with regard to the total weight of all components of the capsule core. The capsule core may contain at least 10 wt% of the salt of dicamba, preferably at least 20 wt% with regard to the total weight of all components of the capsule core. The capsule core may contain less than 90 wt% of the salt of dicamba, preferably up to 80 wt%, more preferably up to 50 wt%, and most preferably up to 40 wt% of the pesticide with regard to the total weight of all components of the capsule core.

The microcapsules and/or the agrochemical compositions containing the microcapsules may contain **further active compounds** selected from
B) herbicides of class b1) to b15):
   b1) lipid biosynthesis inhibitors;
   b2) acetolactate synthase inhibitors (ALS inhibitors);
   b3) photosynthesis inhibitors;
   b4) protoporphyrinogen-IX oxidase inhibitors,
   b5) bleacher herbicides;
   b6) enolpyruvyl shikimate 3-phosphate synthase inhibitors (EPSP inhibitors);
   b7) glutamine synthetase inhibitors;
   b8) 7,8-dihydropteroate synthase inhibitors (DHP inhibitors);
   b9) mitosis inhibitors;
   b10) inhibitors of the synthesis of very long chain fatty acids (VLCFA inhibitors);
   b11) cellulose biosynthesis inhibitors;
   b12) decoupler herbicides;
   b13) auxinic herbicides;
   b14) auxin transport inhibitors; and
   b15) other herbicides selected from the group consisting of bromobutide, chlorflurenol, chlorflurenol-methyl, cinmethylin, cumyluron, dalapon, dazomet, difenzoquat, difenzoquat-metilsulfate, dimethipin, DSMA, dymron, endothal and its salts, etobenzanid, flamprop, flamprop-isopropyl, flamprop-methyl, flamprop-M-isopropyl, flamprop-M-methyl, flurenol, flurenol-butyl, flurprimidol, fosamine, fosamine-ammonium, indanofan, indaziflam, maleic hydrazide, mefluidide, metam, methiozolin (CAS 403640-27-7), methyl azide, methyl bromide, methyl-dymron, methyl iodide, MSMA, oleic acid, oxaziclomefone, pelargonic acid, pyributicarb, quinoclamine, triaziflam, tridiphane and 6-chloro-3-(2-cyclopropyl-6-methylphenoxy)-4-pyridazinol (CAS 499223-49-3) and its salts and esters;
   including their agriculturally acceptable salts or derivatives; and
C) safeners, including their agriculturally acceptable salts or derivatives.

### Examples of herbicides B are:

b1) from the group of the lipid biosynthesis inhibitors: ACC-herbicides such as alloxydim, alloxydim-sodium, butroxydim, clethodim, clodinafop, clodinafop-propargyl, cycloxydim, cyhalofop, cyhalofop-butyl, diclofop, diclofop-methyl, fenoxaprop, fenoxaprop-ethyl, fenoxaprop-P, fenoxaprop-P-ethyl, fluazifop, fluazifop-butyl, fluazifop-P, fluazifop-P-butyl, haloxyfop, haloxyfop-methyl, haloxyfop-P, haloxyfop-P-methyl, metamifop, pinoxaden, profoxydim, propaquizafop, quizalofop, quizalofop-ethyl, quizalofop-tefuryl, quizalofop-P, quizalofop-P-ethyl, quizalofop-P-tefuryl, sethoxydim, tepraloxydim, tralkoxydim, 4-(4'-Chloro-4-cyclopropyl-2'-fluoro[1,1'-biphenyl]-3-yl)-5-hydroxy-2,2,6,6-tetramethyl-2H-pyran-3(6H)-one (CAS 1312337-72-6); 4-(2',4'-Dichloro-4-cyclopropyl[1,1'-biphenyl]-3-yl)-5-hydroxy-2,2,6,6-tetramethyl-2H-pyran-3(6H)-one (CAS 1312337-45-3); 4-(4'-Chloro-4-ethyl-2'-fluoro[1,1'-biphenyl]-3-yl)-5-hydroxy-2,2,6,6-tetramethyl-2H-pyran-3(6H)-one (CAS 1033757-93-5); 4-(2',4'-Dichloro-4-ethyl[1,1'-biphenyl]-3-yl)-2,2,6,6-tetramethyl-2H-pyran-3,5(4H,6H)-dione (CAS 1312340-84-3); 5-(Acetyloxy)-4-(4'-chloro-4-cyclopropyl-2'-fluoro[1,1'-biphenyl]-3-yl)-3,6-dihydro-2,2,6,6-tetramethyl-2H-pyran-3-one (CAS 1312337-48-6); 5-(Acetyloxy)-4-(2 ' ,4'-dichloro-4-cyclopropyl- [1,1'-biphenyl]-3-yl)-3,6-dihydro-2,2,6,6-tetramethyl-2H-pyran-3-one; 5-(Acetyloxy)-4-(4'-chloro-4-ethyl-2'-fluoro[1,1'-biphenyl]-3-yl)-3,6-dihydro-2,2,6,6-tetramethyl-2H-pyran-3-one (CAS 1312340-82-1); 5-(Acetyloxy)-4-(2',4'-dichloro-4-ethyl[1,1'-biphenyl]-3-yl)-3,6-dihydro-2,2,6,6-tetramethyl-2H-pyran-3-one (CAS 1033760-55-2); 4-(4'-Chloro-4-cyclopropyl-2'-fluoro[1,1'-biphenyl]-3-yl)-5,6-dihydro-2,2,6,6-tetramethyl-5-oxo-2H-pyran-3-yl carbonic acid methyl ester (CAS 1312337-51-1); 4-(2 ' ,4'-Dichloro -4-cyclopropyl- [1,1'-biphenyl]-3-yl)-5,6-dihydro-2,2,6,6-tetramethyl-5-oxo-2H-pyran-3-yl carbonic acid methyl ester; 4-(4'-Chloro-4-ethyl-2'-fluoro[1,1'-biphenyl]-3-yl)-5,6-dihydro-2,2,6,6-tetramethyl-5-oxo-2H-pyran-3-yl carbonic acid methyl ester (CAS 1312340-83-2); 4-(2',4'-Dichloro-4-ethyl[1,1'-biphenyl]-3-yl)-5,6-dihydro-2,2,6,6-tetramethyl-5-oxo-2H-pyran-3-yl carbonic acid methyl ester (CAS 1033760-58-5); and non ACC herbicides such as benfuresate, butylate, cycloate, dalapon, dimepiperate, EPTC, esprocarb, ethofumesate, flupropanate, molinate, orbencarb, pebulate, prosulfocarb, TCA, thiobencarb, tiocarbazil, triallate and vernolate;
b2) from the group of the ALS inhibitors: sulfonylureas such as amidosulfuron, azimsulfuron, bensulfuron, bensulfuron-methyl, chlorimuron, chlorimuron-ethyl, chlorsulfuron, cinosulfuron, cyclosulfamuron, ethametsulfuron, ethametsulfuron-methyl, ethoxysulfuron, flazasulfuron, flucetosulfuron, flupyrsulfuron, flupyrsulfuron-methyl-sodium, foramsulfuron, halosulfuron, halosulfuron-methyl, imazosulfuron, iodosulfuron, iodosulfuron-methyl-sodium, iofensulfuron, iofensulfuron-sodium, mesosulfuron, metazosulfuron, metsulfuron, metsulfuron-methyl, nicosulfuron, orthosulfamuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron, triflusulfuron, triflusulfuron-methyl and tritosulfuron, imidazolinones such as imazamethabenz, imazamethabenz-methyl, imazamox, imazapic, imazapyr, imazaquin and imazethapyr, triazolopyrimidine herbicides and sulfonanilides such as cloransulam, cloransulam-methyl, diclosulam, flumetsulam, florasulam, metosulam, penoxsulam, pyrimisulfan and pyroxsulam, pyrimidinylbenzoates such as bispyribac, bispyribac-sodium, pyribenzoxim, pyriftalid, pyriminobac, pyriminobac-methyl, pyrithiobac, pyrithiobac-sodium, 4-[[[2-[(4,6-dimethoxy-2-pyrimidinyl)oxy]phenyl]methyl]amino]-benzoic acid-1-methylethyl ester (CAS 420138-41-6), 4-[[[2-[(4,6-dimethoxy-2-pyrimidinyl)oxy]phenyl]methyl]amino]-benzoic acid propyl ester (CAS 420138-40-5), N-(4-bromophenyl)-2-[(4,6-dimethoxy-2-pyrimidinyl)oxy]benzenemethanamine (CAS 420138-01-8), sulfonylaminocarbonyl-triazolinone herbicides such as flucarbazone, flucarbazone-sodium, propoxycarbazone, propoxycarbazone-sodium, thiencarbazone and thiencarbazone-methyl; and triafamone; among these, a preferred embodiment of the invention relates to those compositions comprising at least one imidazolinone herbicide;
b3) from the group of the photosynthesis inhibitors: amicarbazone, inhibitors of the photosystem II, e.g. triazine herbicides, including of chlorotriazine, triazinones, triazindiones, methylthiotriazines and pyridazinones such as ametryn, atrazine, chloridazone, cyanazine desmetryn, dimethametryn,hexazinone, metribuzin, prometon, prometryn, propazine, simazine, simetryn, terbumeton, terbuthylazin, terbutryn and trietazin, aryl urea such as chlorobromuron, chlorotoluron, chloroxuron, dimefuron, diuron, fluometuron, isoproturon, isouron, linuron, metamitron, methabenzthiazuron, metobenzuron, metoxuron, monolinuron, neburon, siduron, tebuthiuron and thiadiazuron, phenyl carbamates such as desmedipham, karbutilat, phenmedipham, phenmedipham-ethyl, nitrile herbicides such as bromofenoxim, bromoxynil and its salts and esters, ioxynil and its salts and esters, uraciles such as bromacil, lenacil and terbacil, and bentazon and bentazon-sodium, pyridate, pyridafol, pentanochlor and propanil and inhibitors of the photosystem I such as diquat, diquat-dibromide, paraquat, paraquat-dichloride and paraquat-dimetilsulfate. Among these, a preferred embodiment of the invention relates to those compositions comprising at least one aryl urea herbicide. Among these, likewise a preferred embodiment of the invention relates to those compositions comprising at least one triazine herbicide. Among these, likewise a preferred embodiment of the invention relates to those compositions comprising at least one nitrile herbicide;
b4) from the group of the protoporphyrinogen-IX oxidase inhibitors: acifluorfen, acifluorfen-sodium, azafenidin, bencarbazone, benzfendizone, bifenox, butafenacil, carfentrazone, carfentrazone-ethyl, chlomethoxyfen, cinidon-ethyl, fluazolate, flufenpyr, flufenpyr-ethyl, flumiclorac, flumiclorac-pentyl, flumioxazin, fluoroglycofen, fluoroglycofen-ethyl, fluthiacet, fluthiacet-methyl, fomesafen, halosafen, lactofen, oxadiargyl, oxadiazon, oxyfluorfen, pentoxazone, profluazol, pyraclonil, pyraflufen, pyraflufen-ethyl, saflufenacil, sulfentrazone, thidiazimin, tiafenacil, trifludimoxazin, ethyl [3-[2-chloro-4-fluoro-5-(1-methyl-6-trifluoromethyl-2,4-dioxo-1,2,3,4-tetrahydropyrimidin-3-yl)phenoxy]-2-pyridyloxy]acetate (CAS 353292-31-6; S-3100), N-ethyl-3-(2,6-dichloro-4-trifluoromethylphenoxy)-5-methyl-1*H*-pyrazole-1-carboxamide (CAS 452098-92-9), N-tetrahydrofurfuryl-3-(2,6-dichloro-4-trifluoro-methylphenoxy)-5-methyl-1*H*-pyrazole-1-carboxamide (CAS 915396-43-9), N-ethyl-3-(2-chloro-6-fluoro-4-trifluoromethylphenoxy)-5-methyl-1*H*-pyrazole-1-carboxamide (CAS 452099-05-7), N-tetrahydrofurfuryl-3-(2-chloro-6-fluoro-4-trifluoromethylphenoxy)-5-methyl-1*H*-pyrazole-1-carboxamide (CAS 452100-03-7), 3-[7-fluoro-3-oxo-4-(prop-2-ynyl)-3,4-dihydro-2H-benzo[1,4]oxazin-6-yl]-1,5-dimethyl-6-thioxo-[1,3,5]triazinan-2,4-dione (CAS 451484-50-7), 2-(2,2,7-trifluoro-3-oxo-4-prop-2-ynyl-3,4-dihydro-2H-benzo[1,4]oxazin-6-yl)-4,5,6,7-tetrahydro-isoindole-1,3-dione (CAS 1300118-96-0), 1-methyl-6-trifluoromethyl-3-(2,2,7-trifluoro-3-oxo-4-prop-2-ynyl-3,4-dihydro-2H-benzo[1,4]oxazin-6-yl)-1H-pyrimidine-2,4-dione (CAS 1304113-05-0), methyl (*E*)-4-[2-chloro-5-[4-chloro-5-(difluoro-methoxy)-1*H*-methyl-pyrazol-3-yl]-4-fluoro-phenoxy]-3-methoxy-but-2-enoate (CAS 948893-00-3), and 3-[7-chloro-5-fluoro-2-(trifluoromethyl)-1H-benzimidazol-4-yl]-1-methyl-6-(trifluoromethyl)-1H-pyrimidine-2,4-dione (CAS 212754-02-4);
b5) from the group of the bleacher herbicides: PDS inhibitors: beflubutamid, diflufenican, fluridone, flurochloridone, flurtamone, norflurazon, picolinafen, and 4-(3-trifluoromethylphenoxy)-2-(4-trifluoromethylphenyl)pyrimidine (CAS 180608-33-7), HPPD inhibitors: benzobicyclon, benzofenap, bicyclopyrone, clomazone, fenquintrione, isoxaflutole, mesotrione, pyrasulfotole, pyrazolynate, pyrazoxyfen, sulcotrione, tefuryltrione, tembotrione, tolpyralate, topramezone , bleacher, unknown target: aclonifen, amitrole and flumeturon;
b6) from the group of the EPSP synthase inhibitors: glyphosate, glyphosate-isopropylammonium, glyposate-potassium and glyphosate-trimesium (sulfosate);
b7) from the group of the glutamine synthase inhibitors: bilanaphos (bialaphos), bilanaphos-sodium, glufosinate, glufosinate-P and glufosinate-ammonium;
b8) from the group of the DHP synthase inhibitors: asulam;
b9) from the group of the mitosis inhibitors:
   compounds of group K1: dinitroanilines such as benfluralin, butralin, dinitramine, ethalfluralin, fluchloralin, oryzalin, pendimethalin, prodiamine and trifluralin, phosphoramidates such as amiprophos, amiprophos-methyl, and butamiphos, benzoic acid herbicides such as chlorthal, chlorthal-dimethyl, pyridines such as dithiopyr and thiazopyr, benzamides such as propyzamide and tebutam; compounds of group K2: carbetamide, chlorpropham, flamprop, flamprop-isopropyl, flamprop-methyl, flamprop-M-isopropyl, flamprop-M-methyl and propham ; among these, compounds of group K1; in particular dinitroanilines are preferred;
b10) from the group of the VLCFA inhibitors: chloroacetamides such as acetochlor, alachlor, butachlor, dimethachlor, dimethenamid, dimethenamid-P, metazachlor, metolachlor, metolachlor-S, pethoxamid, pretilachlor, propachlor, propisochlor and thenylchlor, oxyacetanilides such as flufenacet and mefenacet, acetanilides such as diphenamid, naproanilide, napropamide and napropamide-M, tetrazolinones such fentrazamide, and other herbicides such as anilofos, cafenstrole, fenoxasulfone, ipfencarbazone, piperophos, pyroxasulfone and isoxazoline compounds of the formulae II.1, 11.2, 11.3, 11.4, 11.5, 11.6, 11.7, 11.8 and 11.9 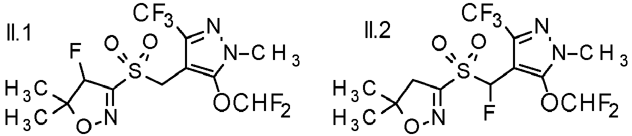 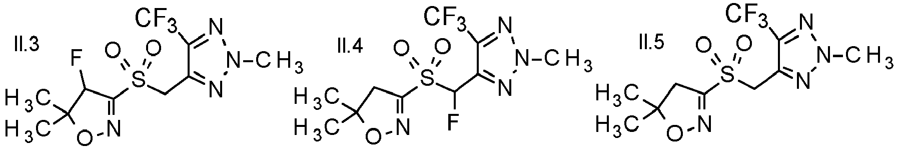 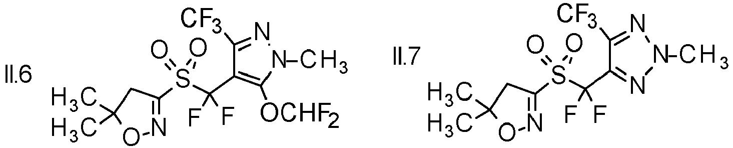 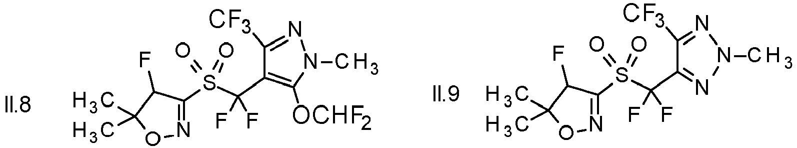 the isoxazoline compounds of the formula (I)I are known in the art, e.g. from WO 2006/024820, WO 2006/037945, WO 2007/071900 and WO 2007/096576; among the VLCFA inhibitors, preference is given to chloroacetamides and oxyacetamides;
b11) from the group of the cellulose biosynthesis inhibitors: chlorthiamid, dichlobenil, flupoxam, indaziflam, isoxaben, triaziflam and 1-cyclohexyl-5-pentafluorphenyloxy-1⁴-[1,2,4,6]thiatriazin-3-ylamine (CAS 175899-01-1);
b12) from the group of the decoupler herbicides: dinoseb, dinoterb and DNOC and its salts;
b13) from the group of the auxinic herbicides: 2,4-D and its salts and esters such as clacyfos, 2,4-DB and its salts and esters, aminocyclopyrachlor and its salts and esters, aminopyralid and its salts such as aminopyralid-dimethylammonium, aminopyralid-tris(2-hydroxypropyl)ammonium and its esters, benazolin, benazolin-ethyl, chloramben and its salts and esters, clomeprop, clopyralid and its salts and esters, dicamba and its salts and esters, dichlorprop and its salts and esters, dichlorprop-P and its salts and esters, fluroxypyr, fluroxypyr-butometyl, fluroxypyr-meptyl, halauxifen and its salts and esters (CAS 943832-60-8); MCPA and its salts and esters, MCPA-thioethyl, MCPB and its salts and esters, mecoprop and its salts and esters, mecoprop-P and its salts and esters, picloram and its salts and esters, quinclorac, quinmerac, TBA (2,3,6) and its salts and esters, triclopyr and its salts and esters, 4-amino-3-chloro-6-(4-chloro-2-fluoro-3-methoxyphenyl)-5-fluoropyridine-2-carboxylic acid and benzyl 4-amino-3-chloro-6-(4-chloro-2-fluoro-3-methoxyphenyl)-5-fluoropyridine-2-carboxylate (CAS 1390661-72-9);
b14) from the group of the auxin transport inhibitors: diflufenzopyr, diflufenzopyr-sodium, naptalam and naptalam-sodium;
b15) from the group of the other herbicides: bromobutide, chlorflurenol, chlorflurenol-methyl, cinmethylin, cumyluron, cyclopyrimorate (CAS 499223-49-3) and its salts and esters, dalapon, dazomet, difenzoquat, difenzoquat-metilsulfate, dimethipin, DSMA, dymron, endothal and its salts, etobenzanid, flurenol, flurenol-butyl, flurprimidol, fosamine, fosamine-ammonium, indanofan, maleic hydrazide, mefluidide, metam, methiozolin (CAS 403640-27-7), methyl azide, methyl bromide, methyl-dymron, methyl iodide, MSMA, oleic acid, oxaziclomefone, pelargonic acid, pyributicarb, quinoclamine and tridiphane.

**Safeners** are chemical compounds which prevent or reduce damage on useful crop plants without having a major impact on the herbicidal action of the herbicidal active components of the present compositions towards unwanted vegetation. They can be applied either before sowings (e.g. on seed treatments, shoots or seedlings) or in the pre-emergence application or post-emergence application of the useful crop plant. The safeners and the microcapsules are applied simultaneously in case the capsule core contains at the safeners, but may also be applied in succession in case the agrochemical composition contains the safeners but not in the capsule core.

**Suitable safeners** are e.g. (quinolin-8-oxy)acetic acids, 1-phenyl-5-haloalkyl-1H-1,2,4-triazol-3-carboxylic acids, 1-phenyl-4,5-dihydro-5-alkyl-1H-pyrazol-3,5-dicarboxylic acids, 4,5-dihydro-5,5-diaryl-3-isoxazol carboxylic acids, dichloroacetamides, alphaoximinophenylacetonitriles, acetophenonoximes, 4,6-dihalo-2-phenylpyrimidines, N-[[4-(aminocarbonyl)phenyl]sulfonyl]-2-benzoic amides, 1,8-naphthalic anhydride, 2-halo-4-(haloalkyl)-5-thiazol carboxylic acids, phosphorthiolates and N-alkyl-O-phenylcarbamates and their agriculturally acceptable salts and their agriculturally acceptable derivatives such amides, esters, and thioesters, provided they have an acid group.
In one embodiment, safeners C are benoxacor, cloquintocet, cyprosulfamide, dichlormid, fenchlorazole, fenclorim, furilazole, isoxadifen, mefenpyr, naphtalic anhydride, 4-(dichloroacetyl)-1-oxa-4-azaspiro[4.5]decane (MON4660, CAS 71526-07-3), 2,2,5-trimethyl-3-(dichloroacetyl)-1,3-oxazolidine (R-29148, CAS 52836-31-4), or N-(2-Methoxybenzoyl)-4-[(methylaminocarbonyl)amino]benzenesulfonamide (CAS 129531-12-0).

The active compounds B of groups b1) to b15) and the active compounds C are known herbicides and safeners, see, for example, The Compendium of Pesticide Common Names (http://www.alanwood.net/pesticides/); Farm Chemicals Handbook 2000 volume 86, Meister Publishing Company, 2000; B. Hock, C. Fedtke, R. R. Schmidt, Herbizide [Herbicides], Georg Thieme Verlag, Stuttgart 1995; W. H. Ahrens, Herbicide Handbook, 7th edition, Weed Science Society of America, 1994; and K. K. Hatzios, Herbicide Handbook, Supplement for the 7th edition, Weed Science Society of America, 1998. 2,2,5-Trimethyl-3-(dichloroacetyl)-1,3-oxazolidine [CAS No. 52836-31-4] is also referred to as R-29148. 4-(Dichloroacetyl)-1-oxa-4-azaspiro[4.5]decane [CAS No. 71526-07-3] is also referred to as AD-67 and MON 4660.

The assignment of the active compounds to the respective mechanisms of action is based on current knowledge. If several mechanisms of action apply to one active compound, this substance was only assigned to one mechanism of action.

Active compounds B and C having a carboxyl group can be employed in the form of the acid, in the form of an **agriculturally suitable salt** as mentioned above or else in the form of an agriculturally acceptable derivative in the compositions according to the invention.

In the case of dicamba, **suitable salts** include those, where the counter ion is an agriculturally acceptable cation. For example, suitable salts of dicamba are dicamba-sodium, dicamba-potassium, dicamba-methylammonium, dicamba-dimethylammonium, dicambaisopropylammonium, dicamba-diglycolamine, dicamba-olamine, dicamba-diolamine, dicamba-trolamine, dicamba-N,N-bis-(3-aminopropyl)methylamine and dicamba-diethylenetriamine. Examples of a suitable ester are dicamba-methyl and dicamba-butotyl. Suitable salts of 2,4-D are 2,4-D-ammonium, 2,4-D-dimethylammonium, 2,4-D-diethylammonium, 2,4-D-diethanolammonium (2,4-D-diolamine), 2,4-D-triethanolammonium, 2,4-D-isopropylammonium, 2,4-D-triisopropanolammonium, 2,4-D-heptylammonium, 2,4-D-dodecylammonium, 2,4-D-tetradecylammonium, 2,4-D-triethylammonium, 2,4-D-tris(2-hydroxypropyl)ammonium, 2,4-D-tris(isopropyl)ammonium, 2,4-D-trolamine, 2,4-D-lithium, 2,4-D-sodium. Examples of suitable esters of 2,4-D are 2,4-D-butotyl, 2,4-D-2-butoxypropyl, 2,4-D-3-butoxypropyl, 2,4-D-butyl, 2,4-D-ethyl, 2,4-D-ethylhexyl, 2,4-D-isobutyl, 2,4-D-isooctyl, 2,4-D-isopropyl, 2,4-D-meptyl, 2,4-D-methyl, 2,4-D-octyl, 2,4-D-pentyl, 2,4-D-propyl, 2,4-D-tefuryl and clacyfos. Suitable salts of 2,4-DB are for example 2,4-DB-sodium, 2,4-DB-potassium and 2,4-DB-dimethylammonium. Suitable esters of 2,4-DB are for example 2,4-DB-butyl and 2,4-DB-isoctyl. Suitable salts of dichlorprop are for example dichlorprop-sodium, dichlorprop-potassium and dichlorprop-dimethylammonium. Examples of suitable esters of dichlorprop are dichlorprop-butotyl and dichlorprop-isoctyl. Suitable salts and esters of MCPA include MCPA-butotyl, MCPA-butyl, MCPA-dimethylammonium, MCPA-diolamine, MCPA-ethyl, MCPA-thioethyl, MCPA-2-ethylhexyl, MCPA-isobutyl, MCPA-isoctyl, MCPA-isopropyl, MCPA-isopropylammonium, MCPA-methyl, MCPA-olamine, MCPA-potassium, MCPA-sodium and MCPA-trolamine. A suitable salt of MCPB is MCPB sodium. A suitable ester of MCPB is MCPB-ethyl. Suitable salts of clopyralid are clopyralid-potassium, clopyralid-olamine and clopyralid-tris-(2-hydroxypropyl)ammonium. Example of suitable esters of clopyralid is clopyralid-methyl.Examples of a suitable ester of fluroxypyr are fluroxypyr-meptyl and fluroxypyr-2-butoxy-1-methylethyl, wherein fluroxypyr-meptyl is preferred.Suitable salts of picloram are picloram-dimethylammonium, picloram-potassium, picloram-triisopropanolammonium, picloram-triisopropylammonium and picloram-trolamine. A suitable ester of picloram is picloram-isoctyl.
A suitable salt of triclopyr is triclopyr-triethylammonium. Suitable esters of triclopyr are for example triclopyr-ethyl and triclopyr-butotyl. Suitable salts and esters of chloramben include chloramben-ammonium, chloramben-diolamine, chloramben-methyl, chloramben-methylammonium and chloramben-sodium. Suitable salts and esters of 2,3,6-TBA include 2,3,6-TBA-dimethylammonium, 2,3,6-TBA-lithium, 2,3,6-TBA-potassium and 2,3,6-TBA-sodium. Suitable salts and esters of aminopyralid include aminopyralid-potassium, aminopyralid-dimethylammonium, and aminopyralid-tris(2-hydroxypropyl)ammonium. Suitable salts of glyphosate are for example glyphosate-ammonium, glyphosate-diammonium, glyphoste-dimethylammonium, glyphosate-isopropylammonium, glyphosate-potassium, glyphosate-sodium, glyphosate-trimesium as well as the ethanolamine and diethanolamine salts, preferably glyphosate-diammonium, glyphosate-isopropylammonium and glyphosate-trimesium (sulfosate). A suitable salt of glufosinate is for example glufosinate-ammonium. A suitable salt of glufosinate-P is for example glufosinate-P-ammonium. Suitable salts and esters of bromoxynil are for example bromoxynil-butyrate, bromoxynil-heptanoate, bromoxynil-octanoate, bromoxynil-potassium and bromoxynil-sodium.
Suitable salts and esters of ioxonil are for example ioxonil-octanoate, ioxonil-potassium and ioxonil-sodium. Suitable salts and esters of mecoprop include mecoprop-butotyl, mecoprop-dimethylammonium, mecoprop-diolamine, mecoprop-ethadyl, mecoprop-2-ethylhexyl, mecoprop-isoctyl, mecoprop-methyl, mecoprop-potassium, mecoprop-sodium and mecoprop-trolamine.

Suitable salts of mecoprop-P are for example mecoprop-P-butotyl, mecoprop-P-dimethylammonium, mecoprop-P-2-ethylhexyl, mecoprop-P-isobutyl, mecoprop-P-potassium and mecoprop-P-sodium. A suitable salt of diflufenzopyr is for example diflufenzopyr-sodium. A suitable salt of naptalam is for example naptalam-sodium. Suitable salts and esters of aminocyclopyrachlor are for example aminocyclopyrachlor-dimethylammonium, aminocyclopyrachlor-methyl, aminocyclopyrachlor-triisopropanolammonium, aminocyclopyrachlor-sodium and aminocyclopyrachlor-potassium. A suitable salt of quinclorac is for example quinclorac-dimethylammonium. A suitable salt of quinmerac is for example quinmerac-dimethylammonium. A suitable salt of imazamox is for example imazamox-ammonium. Suitable salts of imazapic are for example imazapic-ammonium and imazapic-isopropylammonium. Suitable salts of imazapyr are for example imazapyr-ammonium and imazapyr-isopropylammonium. A suitable salt of imazaquin is for example imazaquin-ammonium. Suitable salts of imazethapyr are for example imazethapyr-ammonium and imazethapyr-isopropylammonium. A suitable salt of topramezone is for example topramezone-sodium.

In one embodiment, the further active compound is a herbicide B). In another embodiment, the further active compound is a safener C).
In one embodiment, the capsule core contains exactly one salt of dicamba selected from the sodium salt of dicamba and ammonium salts of dicamba. In another embodiment, the agrochemical composition comprising the microcapsules contains exactly one salt of dicamba selected from the sodium salt of dicamba and ammonium salts of dicamba in the capsule core.
In another embodiment, the capsule core contains exactly one salt of dicamba selected from the sodium salt of dicamba and ammonium salts of dicamba, and at least one, preferably exactly one further active compound. In another embodiment, the capsule core contains exactly one salt of dicamba selected from the sodium salt of dicamba and ammonium salts of dicamba, and at least one, preferably exactly one further active compound selected from herbicides B). In another embodiment, the capsule core contains exactly one salt of dicamba selected from the sodium salt of dicamba and ammonium salts of dicamba, and at least one, preferably exactly one further active compound selected from safeners C). In another embodiment, the agrochemical composition comprising the microcapsules contains exactly one salt of dicamba selected from the sodium salt of dicamba and ammonium salts of dicamba, and at least one, preferably exactly one further active compound in the capsule core. In another embodiment, the agrochemical composition comprising the microcapsules contains exactly one salt of dicamba selected from the sodium salt of dicamba and ammonium salts of dicamba, and at least one, preferably exactly one non-encapsulated further active compound. In another embodiment, the agrochemical composition comprising the microcapsules contains exactly one salt of dicamba selected from the sodium salt of dicamba and ammonium salts of dicamba, and at least one, preferably exactly one non-encapsulated further active compound selected from herbicides B). In another embodiment, the agrochemical composition comprising the microcapsules contains exactly one salt of dicamba selected from the sodium salt of dicamba and ammonium salts of dicamba, and at least one, preferably exactly one non-encapsulated further active compound selected from safeners C). In another embodiment, the agrochemical composition comprising the microcapsules contains exactly one salt of dicamba selected from the sodium salt of dicamba and ammonium salts of dicamba and at least one, preferably exactly one further active compound in the capsule core, and at least one, preferably exactly one non-encapsulated further active compound. In another embodiment, the agrochemical composition comprising the microcapsules contains exactly one salt of dicamba selected from the sodium salt of dicamba and ammonium salts of dicamba and at least one, preferably exactly one further active compound selected from herbicides B) in the capsule core, and at least one, preferably exactly one non-encapsulated further active compound. In another embodiment, the agrochemical composition comprising the microcapsules contains exactly one salt of dicamba selected from the sodium salt of dicamba and ammonium salts of dicamba and at least one, preferably exactly one further active compound selected from safeners C) in the capsule core, and exactly one non-encapsulated further active compound.

In binary compositions comprising exactly one salt of dicamba selected from the sodium salt of dicamba and ammonium salts of dicamba as component α and exactly one further active compound as component *β*, the **weight ratio** of the active compounds *α*:*β* is generally in the range of from 1:1000 to 1000:1, preferably in the range of from 1:500 to 500:1, in particular in the range of from 1:250 to 250:1 and particularly preferably in the range of from 1:75 to 75:1.

In binary compositions comprising exactly one safener C as component *β*, the weight ratio of the active compounds A:C is generally in the range of from 1:1000 to 1000:1, preferably in the range of from 1:500 to 500:1, in particular in the range of from 1:250 to 250:1 and particularly preferably in the range of from 1:75 to 75:1.

In ternary compositions comprising exactly onesalt of dicamba selected from the sodium salt of dicamba and ammonium salts of dicamba as component *α*, at exactly one herbicide B as component *β*, and exactly one safener C as component *ω*, the relative proportions by weight of the components *α*:*β* are generally in the range of from 1:1000 to 1000:1, preferably in the range of from 1:500 to 500:1, in particular in the range of from 1:250 to 250:1 and particularly preferably in the range of from 1:75 to 75:1, the weight ratio of the components *α*:*ω* is generally in the range of from 1:1000 to 1000:1, preferably in the range of from 1:500 to 500:1, in particular in the range of from 1:250 to 250:1 and particularly preferably in the range of from 1:75 to 75:1, and the weight ratio of the components *β*:*ω* is generally in the range of from 1:1000 to 1000:1, preferably in the range of from 1:500 to 500:1, in particular in the range of from 1:250 to 250:1 and particularly preferably in the range of from 1:75 to 75:1. The weight ratio of components *α* + *β* to component *ω* is preferably in the range of from 1:500 to 500:1, in particular in the range of from 1:250 to 250:1 and particularly preferably in the range of from 1:75 to 75:1.

According to one embodiment the further active compound is selected from the lipid biosynthesis inhibitors (herbicide b1). These are compounds that inhibit lipid biosynthesis. Inhibition of the lipid biosynthesis can be affected either through inhibition of acetylCoA carboxylase (hereinafter termed ACC herbicides) or through a different mode of action (hereinafter termed non-ACC herbicides). The ACC herbicides belong to the group A of the HRAC classification system whereas the non-ACC herbicides belong to the group N of the HRAC classification.
According to another embodiment the further active compound is selected from ALS inhibitors (herbicide b2). The herbicidal activity of these compounds is based on the inhibition of acetolactate synthase and thus on the inhibition of the branched chain amino acid biosynthesis. These inhibitors belong to the group B of the HRAC classification system. According to another embodiment the further active compound is selected from inhibitors of photosynthesis (herbicide b3). The herbicidal activity of these compounds is based either on the inhibition of the photosystem II in plants (so-called PSII inhibitors, groups C1, C2 and C3 of HRAC classification) or on diverting the electron transfer in photosystem I in plants (so-called PSI inhibitors, group D of HRAC classification) and thus on an inhibition of photosynthesis. Amongst these, PSII inhibitors are preferred.
According to another embodiment the further active compound is selected from inhibitors of protoporphyrinogen-IX-oxidase (herbicide b4). The herbicidal activity of these compounds is based on the inhibition of the protoporphyrinogen-IX-oxidase. These inhibitors belong to the group E of the HRAC classification system.
According to another embodiment further active compound is selected from bleacher-herbicides (herbicide b5). The herbicidal activity of these compounds is based on the inhibition of the carotenoid biosynthesis. These include compounds which inhibit carotenoid biosynthesis by inhibition of phytoene desaturase (so-called PDS inhibitors, group F1 of HRAC classification), compounds that inhibit the 4-hydroxyphenylpyruvate-dioxygenase (HPPD inhibitors, group F2 of HRAC classification), compounds that inhibit DOX synthase (group F4 of HRAC class) and compounds which inhibit carotenoid biosynthesis by an unknown mode of action (bleacher - unknown target, group F3 of HRAC classification).
According to another embodiment further active compound is selected from EPSP synthase inhibitors (herbicide b6). The herbicidal activity of these compounds is based on the inhibition of enolpyruvyl shikimate 3-phosphate synthase, and thus on the inhibition of the amino acid biosynthesis in plants. These inhibitors belong to the group G of the HRAC classification system.
According to another embodiment further active compound is selected from glutamine synthetase inhibitors (herbicide b7). The herbicidal activity of these compounds is based on the inhibition of glutamine synthetase, and thus on the inhibition of the amino acid biosynthesis in plants. These inhibitors belong to the group H of the HRAC classification system. According to another embodiment further active compound is selected from DHP synthase inhibitors (herbicide b8). The herbicidal activity of these compounds is based on the inhibition of 7,8-dihydropteroate synthase. These inhibitors belong to the group I of the HRAC classification system.
According to another embodiment further active compound is selected from mitosis inhibitors (herbicide b9). The herbicidal activity of these compounds is based on the disturbance or inhibition of microtubule formation or organization, and thus on the inhibition of mitosis. These inhibitors belong to the groups K1 and K2 of the HRAC classification system. Among these, compounds of the group K1, in particular dinitroanilines, are preferred.

According to another embodiment further active compound is selected from VLCFA inhibitors (herbicide b10). The herbicidal activity of these compounds is based on the inhibition of the synthesis of very long chain fatty acids and thus on the disturbance or inhibition of cell division in plants. These inhibitors belong to the group K3 of the HRAC classification system.
According to another embodiment further active compound is selected from cellulose biosynthesis inhibitors (herbicide b11). The herbicidal activity of these compounds is based on the inhibition of the biosynthesis of cellulose and thus on the inhibition of the synthesis of cell walls in plants. These inhibitors belong to the group L of the HRAC classification system.
According to another embodiment further active compound is selected from decoupler herbicides (herbicide b12). The herbicidal activity of these compounds is based on the disruption of the cell membrane. These inhibitors belong to the group M of the HRAC classification system.
According to another embodiment further active compound is selected from auxinic herbicides (herbicide b13). These include compounds that mimic auxins, i.e. plant hormones, and affect the growth of the plants. These compounds belong to the group O of the HRAC classification system.
According to another embodiment further active compound is selected from auxin transport inhibitors (herbicide b14). The herbicidal activity of these compounds is based on the inhibition of the auxin transport in plants. These compounds belong to the group P of the HRAC classification system.
As to the given mechanisms of action and classification of the active substances, see e.g. "HRAC, Classification of Herbicides According to Mode of Action", http://www.plantprotection.org/hrac/MOA.html).

The capsule core typically comprises at least 30 wt% of water, at least 10 wt% of the salt of dicamba, and optionally at least 10 wt% of a further active compound with regard to the total weight of all components of the capsule core. In one embodiment, the capsule core comprises at least 50 wt% of water, at least 20 wt% of the salt of dicamba, and optionally at least 10 wt% of a further active compound with regard to the total weight of all components of the capsule core. In yet another embodiment, the capsule core comprises at least 70 wt% of water and at least 20 wt% of the salt of dicamba with regard to the total weight of all components of the capsule core.

The salt of dicamba may have a **vapor pressure** at 25 ° C of at least 0.1 mPa, preferably at least 1 mPa, and most preferably at least 3 mPa. The vapor pressure refers to the equilibrium vapor pressure and can be determined by the skilled person by known methods, such as disclosed in ASTM E1194-07.

The **capsule shell** usually covers the entire surface area of the capsule core.
Depending on the thickness of the capsule shell, which might be influenced by the chosen process conditions and also by the amounts of the feed materials, the permeability of the capsules shell can be influenced to be impermeable, or sparingly permeable for the capsule core material.

The average **particle size,** also referred to as median diameter, of the microcapsules can be described by the D50 value, where 50% by number of the microcapsules have a particle size lower than the D50 value. Usually, the average particle size ranges from 0.1 to 10 µm. In one embodiment, the average particle size of the capsules ranges from 0.5 to 10 *µ*m. In another embodiment, the average particle size of the capsules is in the range from 0,5 to 10 *µ*m. The particle size distribution can be determined by laser light diffraction of an aqueous suspension comprising the microcapsules. The sample preparation, for example the dilution to the measuring concentration, will, in this measuring method, *inter alia* depend on the apparatus used (for example a Malvern Mastersizer).

The **weight ratio** of capsule core to capsule shell is generally from 50 : 50 to 98 : 2. Preference is given to a core/shell ratio of 75 : 25 to 97 : 3.

The microcapsules comprise a capsule shell comprising a **polyester.** Synthesis of polyesters is generally achieved by a polycondensation reaction of monomers bearing carboxyl, and monomers bearing hydroxyl groups, or monomers bearing carbonyl functional groups and hydroxyl functional groups. For the sake of this invention, the term polyester relates to polymers comprising ester bonds between the monomers forming the main chain of the polymer. In particular, the term polyester does not relate to polymers comprising ester bonds only in the form of the side-arms of comb-type polymers, such as in polymers comprising alkyl(meth)acrylates, alkoxy(meth)acrylates, or alkylalkoxy(meth)acrylates.

Preference is given to polyesters which are built by polycondensation of two complementary monomers, for example a diol and a dicarboxylic acid, or a derivative thereof. In particular the polyester is built by polycondensation of an alcohol selected from diols and polyols, and an acid-component selected from divalent carboxylic acids, and multivalent carboxylic acids, or a derivative thereof. Mixtures of alcohols, and mixtures of acid-components are also suitable. Polyol is to be understood as an alcohol with 3, 4, 5, or more hydroxyl groups, in particular 3 to 5 hydroxyl groups, while multivalent carboxylic acid is to be understood as a carbonic acid with 3, 4, 5, or more carboxylic groups, in particular 3 to 5 carboxylic groups. In one embodiment, a derivative of the acid-component is used for the preparation of the polyester, such as acid halides, acid esters, acid thioesters, and anhydrides. In another embodiment, the acid-component is an acid halide. In yet embodiment, the acid-component is an anhydride.

The term acid halide usually refers to divalent, or multicarboxylic acids, wherein at least two carboxylic acid groups per monomer are in the form of an acid chloride, an acid bromide, or an acid iodide. Usually, the acid halide is an acid chloride.

Examples of acid-components are oxalic acid, malonic acid, succinic acid, glutaric acid, adipic acid, sebacic acid, phthalic acid, and terephthalic acid, tricarballylic acid, and 1,2,4,5-benzenecarboxylic acid. In one embodiment, the acid-component is selected from oxalic acid, malonic acid, succinic acid, glutaric acid, adipic acid, sebacic acid, phthalic acid, and terephthalic acid. In another embodiment, the acid-component is selected from terephthalic acid, and adipic acid.

In one embodiment, the alcohol is a diol. In another embodiment, the alcohol is a polyol. In another embodiment, the acid-component is a divalent carboxylic acid. In yet another embodiment, the acid-component is a multivalent carboxylic acid.

Independently from one another, suitable divalent, or polyols, and suitable acid-components usually have 2 to 20 C-atoms, preferably 2 to 10 C-atoms, most preferably 2 to 5 C-atoms

Suitable alcohols are typically ethylene glycol, diethylene glycol, triethylene glycol, 1,2-propylene glycol, 1,3-propylene glycol, 1,1-dimethyl-1,2-ethanediol, dipropylene glycol, triethylene glycol, tetraethylene glycol, pentaethylene glycol, tripropylene glycol, 1,2-, 1,3- or 1,4-butanediol, 1,5-pentanediol, neopentyl glycol, 1,6-hexanediol, 2-methyl-1,5-pentanediol, 2-ethyl-1,4-butanediol, 1,4-dimethylolcyclohexane, 2,2-bis(4-hydroxycyclohexyl)propane, glycerol, trimethylolethane, trimethylolpropane, trimethylolbutane, 2,2-bis(hydroxylmethyl)-1,3-propanediol (pentaerythritol), ditrimethylolpropane, erythritol and sorbitol. In one embodiment, the alcohol is selected from ethylene glycol, 1,2-propanediol, 1,3-propanediol, glycerol, 1,4-butane diol, trimethylolpropane, pentaerythritol, neopentyl glycol, and 1,6-hexane diol. In another embodiment, the alcohol is glycerol. In another embodiment, the alcohol is pentaerythritol. In another embodiment, the alcohol is neopentyl glycol. In another embodiment, the alcoholo is trimethylolpropane. In another embodiment, the alcohol is glycerol, pentaerythritol, trimethylolpropane or neopentyl glycol. In another embodiment, the alcohol is glycerol, or pentaerythritol.

Other suitable alcohols are polyols with a degree of polymerization (DP) in the range from 10 to 6000. Preferred polymeric polyols are polyvinylalcohols.
The degree of polymerization is defined as the number average of monomeric units in polymer or oligomer. The degree of polymerization equals to (Mₙ/M₀) where Mₙ is the number-average molecular weight (determined by Gel-Permeation-Chromatography) and M₀ is the molecular weight of the monomer unit.
Polyvinyl alcohol (= PVA) corresponds in general according to formula

-CH₂-CHOH-CH₂-CHOH-

with low amounts (up to 2%) of the formula

-CH₂-CHOH-CHOH-CH₂-

It is known that polyvinyl alcohol is produced by hydrolysis (deacetylation) of polyvinyl acetate, whereby the ester groups of polyvinyl acetate are hydrolyzed into hydroxyl groups, thus forming polyvinyl alcohol.
The degree of hydrolysis is a criterion of how many groups are converted into hydroxyl groups. The term "polyvinyl alcohol" in connection with a given degree of hydrolysis means therefore, in fact, a vinyl polymer containing ester and hydroxyl groups.
In one embodiment, the polyvinyl alcohol has a hydrolysis degree between 10% and 99.9%.

The core material usually contains the diol, or polyol in low amounts, such as up to 5 wt%, preferably up to 1 wt%.

The capsule shell is usually **biodegradable.** For the purposes of the present invention, a substance or a mixture of substances complies with the feature termed "biodegradable", if this substance or the mixture of substances has a percentage degree of biodegradation of at least 10 wt% within 1 year under aerobic conditions, preferably of at least 50 wt% within 1 year, most preferably of at least 90 wt% within 1 year, based on the total weight of the capsule shell and according to the processes defined in DIN EN 13432:2000 and DIN EN ISO 14855:1999.

The result of the biodegradability is generally that the capsule shell breaks down within an appropriate and demonstrable period. The degradation may be induced enzymatically, hydrolytically, oxidatively, and/or via exposure to electromagnetic radiation, such as UV-radiation, and is most predominantly caused by exposure to microorganisms, such as bacteria, yeasts, fungi, and algae. An example of a method of quantifying the biodegradability mixes a sample with soil and stores it for a particular time. By way of example, the release of CO₂ as a measure of biodegradation of the sample can be analyzed according to Guideline OECD 301:1992 (301F Manometric Respiratory Test). Herein, a sample is mingled with soil and inserted into a bottle that is subsequently hermetically closed. The bottle further contains a CO₂ absorbing reservoir, such as sodium hydroxide, to remove evolved CO₂ from the internal atmosphere. The head of the bottle further contains a valve for inserting oxygen in order to maintain the pressure and oxygen concentration in the bottle. The amount of consumed oxygen can be quantitatively measured over a given time period to calculate the degree of biodegradation of the sample. Alternatively, no further oxygen is supplied during the experiment and the partial vacuum in the bottle is measured in the bottle head.

In one embodiment, the invention relates to microcapsules comprising a capsule shell and a capsule core;
wherein the capsule shell comprises a polyester comprising in polymerized form
a) an alcohol selected from ethylene glycol, 1,2-propanediol, 1,3-propanediol, glycerol, 1,4-butane diol, trimethylolpropane, pentaerythritol, neopentyl glycol, and 1,6-hexane diol;
b) an acid-component selected from oxalic acid, malonic acid, succinic acid, glutaric acid,
   adipic acid, sebacic acid, phthalic acid, and terephthalic acid;
   wherein the capsule core comprises a water-soluble salt of dicamba selected from the sodium salt of dicamba and ammonium salts of dicamba, wherein the salt of dicamba has a water-solubility of at least 10 g/l at 25 ° C and a vapor pressure at 25 ° C of at least 0.1 mPa; and
   wherein the capsule core further comprises at least 10 wt% of water based on the total weight of the capsule core

In another embodiment, the invention relates to microcapsules comprising a capsule shell and a capsule core;
wherein the capsule shell comprises a polyester comprising in polymerized form
a) an alcohol selected from ethylene glycol, 1,2-propanediol, 1,3-propanediol, glycerol, 1,4-butane diol, trimethylolpropane, pentaerythritol, neopentyl glycol, and 1,6-hexane diol;
b) an acid-component selected from oxalic acid, malonic acid, succinic acid, glutaric acid,
   adipic acid, sebacic acid, phthalic acid, and terephthalic acid;
   wherein the capsule core comprises a water-soluble salt of dicamba selected from the sodium salt of dicamba and ammonium salts of dicamba, wherein the salt of dicamba has a water-solubility of at least 10 g/l at 25 ° C and a vapor pressure at 25 ° C of at least 1 mPa; and
   wherein the capsule core further comprises at least 10 wt% of water based on the total weight of the capsule core.

In yet another embodiment, the invention relates to microcapsules comprising a capsule shell and a capsule core;
wherein the capsule shell comprises a polyester comprising in polymerized form
a) an alcohol selected from ethylene glycol, 1,2-propanediol, 1,3-propanediol, glycerol, 1,4-butane diol, trimethylolpropane, pentaerythritol, neopentyl glycol, and 1,6-hexane diol;
b) an acid-component selected from oxalic acid, malonic acid, succinic acid, glutaric acid,
   adipic acid, sebacic acid, phthalic acid, and terephthalic acid;
   wherein the capsule core comprises at least 20 wt% of a water-soluble salt of dicamba selected from the sodium salt of dicamba and ammonium salts of dicamba based on the total weight of all components of the capsule core;
   wherein the salt of dicamba has a water-solubility at 25 ° C of at least 10 g/l and a vapor pressure 25 ° C of at least 1 mPa; and
   wherein the capsule core further comprises at least 10 wt% of water based on the total weight of the capsule core

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises at least 20 wt% of a water-soluble salt of dicamba selected from the sodium salt of dicamba and ammonium salts of dicamba, based on the total weight of all components of the capsule core;
   wherein the salt of dicamba has a water-solubility at 25 ° C of at least 10 g/l and a vapor pressure 25 ° C of at least 1 mPa; and
   wherein the capsule core further comprises at least 10 wt% of water based on the total weight of the capsule core

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises at least 20 wt% of a water-soluble salt of dicamba selected from the sodium salt of dicamba and ammonium salts of dicamba, based on the total weight of all components of the capsule core;
   wherein the salt of dicamba has a water-solubility at 25 ° C of at least 10 g/l and a vapor pressure 25 ° C of at least 1 mPa; and
   wherein the capsule core further comprises at least 10 wt% of water based on the total weight of the capsule core.

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises at least 20 wt% of a water-soluble salt of dicamba selected from the sodium salt of dicamba and ammonium salts of dicamba,
   based on the total weight of all components of the capsule core;
   wherein the salt of dicamba has a water-solubility at 25 ° C of at least 10 g/l and a vapor pressure 25 ° C of at least 1 mPa; and
   wherein the capsule core further comprises at least 10 wt% of water based on the total weight of the capsule core

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises a water-soluble salt of dicamba selected from the sodium salt of dicamba and ammonium salts of dicamba, and
   wherein the capsule core further comprises at least 30 wt% of water based on the total weight of the capsule core.

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises a water-soluble salt of dicamba selected from the sodium salt of dicamba and ammonium salts of dicamba, wherein the salt of dicamba has a water-solubility of at least 10 g/l at 25 ° C.; and wherein the capsule core further comprises at least 30 wt% of water based on the total weight of the capsule core.

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises a water-soluble salt of dicamba selected from the sodium salt of dicamba and ammonium salts of dicamba, wherein the salt of dicamba has a water-solubility of at least 10 g/l at 25 ° C and a further active compound; and
   wherein the capsule core further comprises at least 30 wt% of water based on the total weight of the capsule core.

In yet another embodiment, the invention relates to microcapsules comprising a capsule shell and a capsule core;
wherein the capsule shell comprises a polyester comprising in polymerized form
a) an alcohol selected from glycerol, trimethylolpropane, pentaerythritol, or neopentyl glycol;
b) an acid-component selected from adipic acid, and terephthalic acid;
   wherein the capsule core comprises a water-soluble salt of dicamba selected from the sodium salt of dicamba and ammonium salts of dicamba, wherein the salt of dicamba has a water-solubility of at least 10 g/l at 25 ° C and a further active compound selected from herbicides B); and
   wherein the capsule core further comprises at least 30 wt% of water based on the total weight of the capsule core.

The instant invention also relates to a **process for manufacturing the microcapsules,** comprising the steps of
a) preparing an inverse emulsion with an aqueous dispersed phase, and a hydrophobic continuous phase, wherein the aqueous dispersed phase comprises an alcohol selected from diols, and polyols, and the salt of dicamba in dissolved form; and
b) subsequently adding an acid-component selected from divalent, and multivalent carboxylic acids; and acid halides, acid esters, acid thioesters, and acid anhydrides thereof.

The amount of the polyol to be used according to the invention and of the acid halide of a divalent, or multivalent carboxylic acid varies within the customary scope for interfacial polycondensation processes.

Depending on the process parameters, the acid-component is a divalent, or multivalent carboxylic acid, or a derivative thereof as defined above. In one embodiment, a catalyst is added for the polymerization reaction in an additional step c) and the acid-component is in the form of its free acid. The catalyst may be a coupling agent. Suitable coupling agents are selected from carbodiimides, such as DCC (dicyclohexylcarbodiimide) and DCl (diisopropylcarbodiimide), benzotriazol derivatives, such as HATU (O-(7-azabenzotriazol-1-yl)-N,N,N',N'-tetramethyluronium hexafluorophosphate), HBTU ((Obenzotriazol-1-yl)-N,N,N',N'-tetramethyluronium hexafluorophosphate) and HCTU (1H-benzotriazolium-1-[bis(dimethyl-amino)methylene]-5-chloro tetrafluoroborate) and phosphonium-derived activators, such as BOP ((benzotriazol-1-yloxy)-tris(dimethylamino) phosphonium hexafluorophosphate), Py-BOP ((benzotriazol-1-yloxy)-tripyrrolidinphosphonium hexafluorophosphate) and Py-BrOP (bromotripyrrolidinphosphonium hexafluorophosphate).

In another embodiment, an acid halide of a divalent, or multivalent carboxylic acid is used in step b).

The halide of the divalent or multivalent carboxylic acid are usually used in amounts of from 0.5 to 40% by weight, based on the sum of capsule core material and capsule shell, in particular from 1 to 25% by weight.

The **hydrophobic continuous phase** usually consists, to more than 95% by weight, of a hydrophobic diluent.
Herein below, "hydrophobic diluent" means diluents which have a solubility in water of < 10 g/l, in particular < 5 g/l at 20° C and atmospheric pressure. In particular, the hydrophobic diluent is selected from
- cyclohexane,
- glycerol ester oils,
- hydrocarbon oils, such as paraffin oil, diisopropylnaphthalene, purcellin oil, perhydrosqualene and solutions of microcrystalline waxes in hydrocarbon oils,
- animal or vegetable oils,
- mineral oils, the distillation start-point of which under atmospheric pressure is ca. 250° C and the distillation end-point of which is 410° C, such as e.g. Vaseline oil,
- esters of saturated or unsaturated fatty acids, such as alkyl myristates, e.g. isopropyl, butyl or cetyl myristate, hexadecyl stearate, ethyl or isopropyl palmitate and cetyl ricinolate,
- silicone oils, such as dimethylpolysiloxane, methyl phenyl polysiloxane and the silicon glycol copolymer,
- fatty acids and fatty alcohols or waxes such as carnauba wax, candelilla wax, beeswax, microcrystalline wax, ozokerite wax and Ca, Mg and Al oleates, myristates, linoleates and stearates.
Mixtures of hydrophobic diluents are also suitable.

"Glycerol ester oils" means esters of saturated or unsaturated fatty acids with glycerol. Mono-, divalent and triglycerides, and their mixtures are suitable. Preference is given to fatty acid triglycerides. Fatty acids which may be mentioned are, for example, C₆-C₁₂-fatty acids such as hexanoic acid, octanoic acid, decanoic acid and dodecanoic acid. Preferred glycerol ester oils are C₆-C₁₂-fatty acid triglycerides, in particular octanoic acid and decanoic acid triglycerides, and their mixtures.

In one embodiment, the hydrophobic diluent is a hydrocarbon selected from aromatic and aliphatic hydrocarbons. In another embodiment, the hydrophobic diluent is a cycloalkane, a C₆-C₂₀ alkane, or mixtures thereof, such as cyclohexane, and C₁₀-C₁₂-isoalkanes. In another embodiment, the hydrophobic fluid is an aromatic hydrocarbon, such as benzene, toluene, naphthalene, alkylated naphthalene, or mixtures thereof.

The aqueous dispersed phase usually comprises more than 5 wt% of water based on the total weight of the dispersed phase, preferably at least 10 wt%, more preferably at least 30 wt%, and in particular at least 50 wt%. In another embodiment, the aqueous dispersed phase comprises more than 5 wt% of water based on the total weight of the total weight of the capsule core of the thus produced microcapsules, preferably at least 10 wt%, more preferably at least 30 wt%, and in particular at least 50 wt%.

The divalent, or multivalent carboxylic acid, or or acid halide, acid ester, acid thioester, or acid anhydride thereof in step b) may be dissolved prior to admixture to the aqueous phase in a hydrophobic diluent, as defined above. The divalent, or multivalent carboxylic acid may be dissolved in the same hydrophobic fluent as used for the hydrophobic continuous phase in step a), or in a different. In one embodiment, the divalent, or multivalent carboxylic acid is dissolved in an ester of saturated or unsaturated fatty acids, such as dibutyl adipate, cetyl myristate, hexadecyl stearate, ethyl or isopropyl palmitate and cetyl ricinolate, preferably dibutyl adipate.

Typically, a **protective colloid** is added in step a) of the process for manufacturing the microcapsules as part of the oil phase. As a rule, the microcapsules are prepared in the presence of at least one organic protective colloid. These protective colloids may be ionic or neutral. Protective colloids can be used here either individually or else in mixtures of two or more identically or differently charged protective colloids.
In particular the protective colloid is an amphiphilic polymer. According to one embodiment the amphiphilic polymer is obtained by free-radical polymerization of a monomer composition comprising ethylenically unsaturated hydrophilic monomers II and ethylenically unsaturated hydrophobic monomers I. The amphiphilic polymer here especially exhibits a statistical distribution of the monomer units.

Suitable ethylenically unsaturated hydrophobic **monomers** I comprise long-chain monomers with C₈-C₂₀-alkyl radicals. Of suitability are, for example, esters of C₈-C₂₀-alcohols, in particular C₁₂- to C₂₀-alcohols, in particular C₁₆-C₂₀-alcohols, with ethylenically unsaturated carboxylic acids, in particular with ethylenically unsaturated C₃-C₆-carboxylic acids such as acrylic acid, methacrylic acid, fumaric acid, itaconic acid and aconitic acid. By way of example, mention may be made of dodecyl acrylate, dodecyl methacrylate, tridecyl acrylate, tridecyl methacrylate, tetradecyl acrylate, tetradecyl methacrylate, octadecyl acrylate, octadecyl methacrylate. Particular preference is given to octadecyl acrylate and octadecyl methacrylate.

Within the context of the ethylenically unsaturated hydrophilic monomers II, hydrophilic means that they have a solubility in water of > 50 g/l at 20° C and atmospheric pressure.

Suitable ethylenically unsaturated hydrophilic **monomers II** are ethylenically unsaturated monomers with acid groups, and salts thereof, ethylenically unsaturated quaternary compounds, hydroxy (C₁-C₄)alkyl esters of ethylenically unsaturated acids, alkylaminoalkyl (meth)acrylates and alkylaminoalkyl(meth)acrylamides. Ethylenically unsaturated hydrophilic monomers with acid groups or salts of acid groups that may be mentioned by way of example are acrylic acid, methacrylic acid, 2-acrylamide-2-methylpropanesulfonic acid, itaconic acid, maleic acid, fumaric acid. Ethylenically unsaturated quaternary compounds that may be mentioned are dimethylaminoethyl acrylate or methacrylates which are quaternized with methyl chloride. Further suitable ethylenically unsaturated hydrophilic monomers are maleic anhydride and acrylamide. Particularly preferred monomers II are (meth)acrylic acid.

Besides the ethylenically unsaturated hydrophobic monomers (monomers I) and the ethylenically unsaturated hydrophilic monomers (monomers II), the amphiphilic polymer can also comprise further comonomers (monomers III) in polymerized form which are different from the monomers of groups I and II. Ethylenically unsaturated comonomers of this type can be chosen to modify the solubility of the amphiphilic polymer.

Suitable other monomers **(monomers III)** are nonionic monomers which optionally have C₁-C₄-alkyl radicals. In particular, the other monomers are selected from styrene, C₁-C₄-alkylstyrenes such as methylstyrene, vinyl esters of C₃-C₆-carboxylic acids such as vinyl acetate, vinyl halides, acrylonitrile, methacrylonitrile, ethylene, butylene, butadiene and other olefins, C₁-C₄-al-kyl esters and glycidyl esters of ethylenically unsaturated carboxylic acids. Preference is given to C₁-C₄-alkyl esters and glycidyl esters of ethylenically unsaturated C₃-C₆-carboxylic acids such as acrylic acid, methacrylic acid, fumaric acid, itaconic acid and aconitic acid, for example methyl acrylate, methyl methacrylate, butyl acrylate or butyl methacrylate, and glycidyl methacrylate.

The weight ratio of ethylenically unsaturated hydrophobic monomers/ethylenically unsaturated hydrophilic monomers is in particular 95/5 to 20/80, especially 90/10 to 30/60. The amphiphilic polymer generally has an average **molecular weight M_{w}** (determined by means of gel permeation chromatography) of from 5000 to 500 000 g/mol, in particular from 10 000 up to 400 000 g/mol and in particular 30 000 to 200 000 g/mol.

The amphiphilic polymers are in particular prepared by initially introducing the total amount of the monomers in the form of a mixture and then carrying out the polymerization. Furthermore, it is possible to meter in the monomers under polymerization conditions discontinuously in one or more part amounts or continuously in constant or changing quantitative streams.
The optimum amount of amphiphilic polymer for stabilizing the hydrophilic droplets before the reaction and the microcapsules after the reaction is influenced firstly by the amphiphilic polymer itself, secondly by the reaction temperature, the desired microcapsule size and by the shell materials, and also the core composition. The optimally required amount can be ascertained easily by persons of ordinary skill in the art. As a rule, the amphiphilic polymer is used for preparing the emulsion in an amount of from 0.01 to 15% by weight, in particular 0.05 to 12% by weight and especially 0.1 to 10% by weight, based on the total weight of the capsules.
The stabilized droplets of the inverse emulsion have a **size** which corresponds approximately to the size of the later microcapsules. The shell formation takes place by polycondensation reaction of the monomers, which is started with the addition of the acid-component.
The capsule size can be controlled within certain limits via the rotational speed of the dispersing device/homogenizing device and/or with the help of the concentration of the amphiphilic polymer and/or via its molecular weight, i.e. via the viscosity of the continuous phase. In this connection, the size of the dispersed droplets decreases as the rotational speed increases up to a limiting rotational speed.
In this connection, it is important that the dispersing devices are used at the start of capsule formation. For continuously operating devices with forced through flow, it is sometimes advantageous to pass the emulsion through the shear field several times.
As a rule, the polymerization is carried out at 20 to 85° C, in particular at 20-25 ° C. Expediently, the polymerization is performed at atmospheric pressure, although it is also possible to work at reduced or slightly increased pressure.
The reaction time of the polycondensation is normally 1 to 10 hours, mostly 2 to 5 hours. The microcapsules obtained can be **isolated** by removing the hydrophobic solvent. This can be performed for example by filtration centrifugation, or evaporating off the hydrophobic solvent or by means of suitable spray-drying processes.

The microcapsules can be formulated in the form of an **agrochemical composition** containing the microcapsules and a non-encapsulated auxiliary as defined hereinafter below. The concentration of the non-encapsulated auxiliary is usually up to 30 wt%, preferably up to 20 wt%, and in particular up to 15 wt%, based on the total weight of the agrochemical composition.

The concentration of the salt of dicamba in the agrochemical composition is usually from 1 to 90 wt%, preferably from 1 to 80 wt%, more preferably from 5 to 70 wt% of the total mass of the agrochemical composition. The concentration of the salt of dicamba and the further active components in the agrochemical composition is usually from 1 to 90 wt%, preferably from 1 to 80 wt%, more preferably from 5 to 70 wt% of the total mass of the agrochemical composition.

The agrochemical compositions generally comprise between 0.01 and 95%, preferably between 0.1 and 90%, and most preferably between 0.5 and 75%, by **weight of the capsules.** The pesticides are employed in a purity of from 90% to 100%, preferably from 95% to 100% (according to NMR spectrum).

The capsules can be converted into customary formulation types of agrochemical compositions, such as aqueous liquid capsule formulations (e.g. CS, ZC), pastes, pastilles, wettable powders or dusts (e.g. WP, SP, WS, DP, DS), pressings (e.g. BR, TB, DT), granules (e.g. WG, SG, GR, FG, GG, MG), insecticidal articles (e.g. LN), as well as gel formulations, e.g. for the treatment of plant propagation materials, such as seeds (e.g. GF). These and further compositions types are defined in the "Catalogue of pesticide formulation types and international coding system", Technical Monograph No. 2, 6th Ed. May 2008, CropLife International.

The compositions are **prepared** in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

Examples for suitable **auxiliaries** are solvents, liquid carriers, solid carriers or fillers, surfactants, dispersants, emulsifiers, wetters, adjuvants, solubilizers, penetration enhancers, protective colloids, adhesion agents, thickeners, humectants, repellents, attractants, feeding stimulants, compatibilizers, bactericides, anti-freezing agents, anti-foaming agents, colorants, tackifiers and binders.
Suitable **solvents** and liquid carriers are water and organic solvents, such as mineral oil fractions of medium to high boiling point, e.g. kerosene, diesel oil; oils of vegetable or animal origin; aliphatic, cyclic and aromatic hydrocarbons, e. g. toluene, paraffin, tetrahydronaphthalene, alkylated naphthalenes; alcohols, e.g. ethanol, propanol, butanol, benzyl alcohol, cyclohexanol; glycols; DMSO; ketones, e.g. cyclohexanone; esters, e.g. lactates, carbonates, fatty acid esters, gamma-butyrolactone; fatty acids; phosphonates; amines; amides, e.g. N-methylpyrrolidone, fatty acid dimethylamides; and mixtures thereof.
Suitable **solid carriers** or fillers are mineral earths, e.g. silicates, silica gels, talc, kaolins, limestone, lime, chalk, clays, dolomite, diatomaceous earth, bentonite, calcium sulfate, magnesium sulfate, magnesium oxide; polysaccharide powders, e.g. cellulose, starch; fertilizers, e.g. ammonium sulfate, ammonium phosphate, ammonium nitrate, ureas; products of vegetable origin, e.g. cereal meal, tree bark meal, wood meal, nutshell meal, and mixtures thereof.

Suitable **surfactants** are surface-active compounds, such as anionic, cationic, non-ionic and amphoteric surfactants, block polymers, polyelectrolytes, and mixtures thereof. Such surfactants can be used as emulsifier, dispersant, solubilizer, wetter, penetration enhancer, protective colloid, or adjuvant. Examples of surfactants are listed in McCutcheon's, Vol.1: Emulsifiers & Detergents, McCutcheon's Directories, Glen Rock, USA, 2008 (International Ed. or North American Ed.).
Suitable **anionic** surfactants are alkali, alkaline earth or ammonium salts of sulfonates, sulphates, phosphates, carboxylates, and mixtures thereof. Examples of sulfonates are alkylarylsulfonates, diphenyl sulfonates, alpha-olefin sulfonates, lignin sulfonates, sulfonates of fatty acids and oils, sulfonates of ethoxylated alkyl phenols, sulfonates of alkoxylated aryl phenols, sulfonates of condensed naphthalenes, sulfonates of dodecyl- and tridecylbenzenes, sulfonates of naphthalenes and alkylnaphthalenes, sulfosuccinates or sulfosuccinamates. Examples of sulphates are sulphates of fatty acids and oils, of ethoxylated alkylphenols, of alcohols, of ethoxylated alcohols, or of fatty acid esters. Examples of phosphates are phosphate esters. Examples of carboxylates are alkyl carboxylates, and carboxylated alcohol or alkyl phenol ethoxylate.
Suitable **non-ionic** surfactants are alkoxylates, N-substituted fatty acid amides, amine oxides, esters, sugar-based surfactants, polymeric surfactants, and mixtures thereof. Examples of alkoxylates are compounds such as alcohols, alkyl phenols, amines, amides, aryl phenols, fatty acids or fatty acid esters which have been alkoxylated with 1 to 50 equivalents. Ethylene oxide and/or propylene oxide may be employed for the alkoxylation, preferably ethylene oxide. Examples of N-substituted fatty acid amides are fatty acid glucamides or fatty acid alkanolamides. Examples of esters are fatty acid esters, glycerol esters or monoglycerides. Examples of sugar-based surfactants are sorbitans, ethoxylated sorbitans, sucrose and glucose esters or alkylpolyglucosides. Examples of polymeric surfactants are home- or copolymers of vinylpyrrolidone, vinyl alcohols, or vinyl acetate.
Suitable **cationic** surfactants are quaternary surfactants, for example quaternary ammonium compounds with one or two hydrophobic groups, or salts of long-chain primary amines. Suitable **amphoteric** surfactants are alkylbetains and imidazolines. Suitable **block polymers** are block polymers of the A-B or A-B-A type comprising blocks of polyethylene oxide and polypropylene oxide, or of the A-B-C type comprising alkanol, polyethylene oxide and polypropylene oxide. Suitable **polyelectrolytes** are polyacids or polybases. Examples of polyacids are alkali salts of polyacrylic acid or polyacid comb polymers. Examples of polybases are polyvinylamines or polyethyleneamines.
Suitable **adjuvants** are compounds, which have a neglectable or even no pesticidal activity themselves, and which improve the biological performance of the compound I on the target. Examples are surfactants, mineral or vegetable oils, and other auxiliaries. Further examples are listed by Knowles, Adjuvants and additives, Agrow Reports DS256, T&F Informa UK, 2006, chapter 5.
Suitable **thickeners** are polysaccharides (e.g. xanthan gum, carboxymethylcellulose), inorganic clays (organically modified or unmodified), polycarboxylates, and silicates.
Suitable **bactericides** are bronopol and isothiazolinone derivatives such as alkylisothiazolinones and benzisothiazolinones.
Suitable **anti-freezing agents** are ethylene glycol, propylene glycol, urea and glycerin.

Suitable **anti-foaming agents** are silicones, long chain alcohols, and salts of fatty acids. Suitable **colorants** (e.g. in red, blue, or green) are pigments of low water solubility and water-soluble dyes. Examples are inorganic colorants (e.g. iron oxide, titan oxide, iron hexacyanoferrate) and organic colorants (e.g. alizarin-, azo- and phthalocyanine colorants). Suitable **tackifiers or binders** are polyvinyl pyrrolidones, polyvinyl acetates, polyvinyl alcohols, polyacrylates, biological or synthetic waxes, and cellulose ethers.

The invention also relates to a **method of controlling** undesired insect or mite attack, harmfull fungy, and/or undesired vegetation and/or for regulating the growth of plants, wherein the micro-capsules are allowed to act on the respective pests, their environment, or the crop plants to be protected from the respective pest, on the soil and/or on the crop plants and/or on their environment. Usually, the method of controlling undesired insect or mite attack, harmfull fungy, and/or undesired vegetation and/or for regulating the growth of plants does not relate to therapeutic methods, i.e. methods for the treatment of humans or animals.
In one embodiment, the invention relates to a method of controlling undesired vegetation. If undesired vegetation is controlled, the microcapsules are usually applied on the crop plants to be protected from the undesired vegetation, on the soil and/or on the crop plants and/or on their environment. In one embodiment, the microcapsules are applied to the soil. In another embodiment, the microcapsules are applied to the foliage.
When employed in plant protection, the **amounts of pesticide applied** are, depending on the kind of effect desired, from 0.001 to 2 kg per ha, preferably from 0.005 to 2 kg per ha, more preferably from 0.05 to 0.9 kg per ha, in particular from 0.1 to 0.75 kg per ha.

Various types of oils, wetters, adjuvants, fertilizer, or micronutrients, and other pesticides (e.g. herbicides, insecticides, fungicides, growth regulators, safeners) may be added to the microcapsules or the agrochemical compositions comprising them as premix or, if appropriate not until immediately prior to use **(tank mix).** These agents can be admixed with the microcapsules or the agrochemical compositions in a weight ratio of 1:100 to 100:1, preferably 1:10 to 10:1.

The **user applies** an agrochemical composition containing the microcapsules usually from a predosage device, a knapsack sprayer, a spray tank, a spray plane, or an irrigation system. Usually, the agrochemical composition is made up with water, buffer, and/or further auxiliaries to the desired application concentration and the ready-to-use spray liquor or the agrochemical composition according to the invention is thus obtained. Usually, 20 to 2000 liters, preferably 50 to 400 liters, of the ready-to-use spray liquor are applied per hectare of agricultural useful area.

According to one embodiment, individual components of the composition according to the invention such as parts of a **kit or parts** of a binary or ternary mixture may be mixed by the user himself in a spray tank and further auxiliaries may be added, if appropriate.

The microcapsules or the agrochemical compositions containing the microcapsules control vegetation on non-crop areas very efficiently, especially at high rates of application. They act against broad-leafed weeds and grass weeds in crops such as wheat, rice, corn, soybeans and cotton without causing any significant damage to the crop plants. This effect is mainly observed at low rates of application.

The microcapsules or the agrochemical compositions comprising the microcapsules are usually applied to the plants by spraying the leaves. Here, the application can be carried out using, for example, water as carrier by customary spraying techniques using spray liquor amounts of from about 100 to 1000 l/ha (for example from 300 to 400 l/ha). Application may also involve the low-volume or the ultra-low-volume method, or the use of micro granules. Application of the microcapsules, or of the agrochemical compositions containing the microcapsules can be done before, during and/or after, preferably during and/or after, the emergence of the undesirable vegetation.

The microcapsules, or of the agrochemical compositions containing the microcapsules can be applied pre- or post-emergence or together with the plant propagation material of a crop plant. It is also possible to apply microcapsules by applying plant propagation material, pretreated with the microcapsules, of a crop plant. If the pesticide, or the further active compounds are less well tolerated by certain crop plants, application techniques may be used in which the herbicidal compositions are sprayed, with the aid of the spraying equipment, in such a way that as far as possible they do not come into contact with the leaves of the sensitive crop plants, while the active compounds reach the leaves of undesirable plants growing underneath, or the bare soil surface (post-directed, lay-by).

The invention also relates to plant **propagation material** comprising the microcapsules. Plant propagation material may relate to seeds, fruits, tubers, cuttings, or bulbs, preferably seeds.
In treatment of plant propagation materials, such as seeds, e. g. by dusting, coating or drenching seed, amounts of encapsulated pesticide is usually from 0.1 to 1000 g, preferably from 1 to 1000 g, more preferably from 1 to 100 g and most preferably from 5 to 100 g, per 100 kilogram of plant propagation material (preferably seed) are generally required.
The treatment of seeds comprises essentially all procedures familiar to the person skilled in the art (seed dressing, seed coating, seed dusting, seed soaking, seed film coating, seed multilayer coating, seed encrusting, seed dripping and seed pelleting). Here, the microcapsules can be applied diluted or undiluted. The seed used can be seed of the crop plants mentioned below.

Moreover, it may be advantageous to apply the microcapsules on their own or jointly in combination with other crop protection agents, for example with agents for controlling pests or phytopathogenic fungi or bacteria or with groups of active compounds which regulate growth. Also of interest is the miscibility with mineral salt solutions which are employed for treating nutritional and trace element deficiencies. Non-phytotoxic oils and oil concentrates can also be added.

Depending on the application method in question, the **microcapsules, or the agrochemical compositions containing the microcapsules** can be employed in crop plants for eliminating undesired vegetation. Examples of suitable crop plants are the following:
*Allium cepa, Ananas comosus, Arachis hypogaea, Asparagus officinalis, Avena sativa, Beta vulgaris spec. altissima, Beta vulgaris spec. rapa, Brassica napus var. napus, Brassica napus var. napobrassica, Brassica rapa var. silvestris, Brassica oleracea, Brassica nigra, Camellia sinensis, Carthamus tinctorius, Carya illinoinensis, Citrus limon, Citrus sinensis, Coffea arabica (Coffea canephora, Coffea liberica), Cucumis sativus, Cynodon dactylon, Daucus carota, Elaeis guineensis, Fragaria vesca, Glycine max, Gossypium hirsutum, (Gossypium arboreum, Gossypium herbaceum, Gossypium vitifolium), Helianthus annuus, Hevea brasiliensis, Hordeum vulgare, Humulus lupulus, Ipomoea batatas, Juglans regia, Lens culinaris, Linum usitatissimum, Lycopersicon lycopersicum, Malus spec., Manihot esculenta, Medicago sativa, Musa spec., Nicotiana tabacum (N.rustica), Olea europaea, Oryza sativa, Phaseolus lunatus, Phaseolus vulgaris, Picea abies, Pinus spec., Pistacia vera, Pisum sativum, Prunus avium, Prunus persica, Pyrus communis, Prunus armeniaca, Prunus cerasus, Prunus dulcis and prunus domestica, Ribes sylvestre, Ricinus communis, Saccharum officinarum, Secale cereale, Sinapis alba, Solanum tuberosum, Sorghum bicolor (s. vulgare), Theobroma cacao, Trifolium pratense, Triticum aestivum, Triticale, Triticum durum, Vicia faba, Vitis vinifera, Zea mays.* Especially preferred crops are crops of cereals, corn, soybeans, rice, oilseed rape, cotton, potatoes, peanuts or permanent crops.

The compositions according to the invention can also be used in **genetically modified crop plants.** The term "genetically modified crop plants" is to be understood as plants whose genetic material has been modified by the use of recombinant DNA techniques to include an inserted sequence of DNA that is not native to that crop plant species' genome or to exhibit a deletion of DNA that was native to that species' genome, wherein the modification(s) cannot readily be obtained by cross breeding, mutagenesis or natural recombination alone. Often, a particular genetically modified crop plant will be one that has obtained its genetic modification(s) by inheritance through a natural breeding or propagation process from an ancestral crop plant whose genome was the one directly treated by use of a recombinant DNA technique. Typically, one or more genes have been integrated into the genetic material of a genetically modified crop plant in order to improve certain properties of the crop plant. Such genetic modifications also include but are not limited to targeted post-translational modification of protein(s), oligo- or polypeptides. e. g., by inclusion therein of amino acid mutation(s) that permit, decrease, or promote glycosylation or polymer additions such as prenylation, acetylation farnesylation, or PEG moiety attachment.

Crop plants that have been modified by breeding, mutagenesis or genetic engineering, e.g. have been rendered tolerant to applications of specific classes of herbicides, such as auxinic herbicides such as dicamba or 2,4-D; bleacher herbicides such as 4-hydroxyphenylpyruvate dioxygenase (HPPD) inhibitors or phytoene desaturase (PDS) inhibitors; acetolactate synthase (ALS) inhibitors such as sulfonylureas or imidazolinones; enolpyruvyl shikimate 3-phosphate synthase (EPSP) inhibitors such as glyphosate; glutamine synthetase (GS) inhibitors such as glufosinate; protoporphyrinogen-IX oxidase inhibitors; lipid biosynthesis inhibitors such as acetylCoA carboxylase (ACCase) inhibitors; or oxynil (i.e. bromoxynil or ioxynil) herbicides as a result of conventional methods of breeding or genetic engineering; furthermore, crop plants have been made resistant to multiple classes of herbicides through multiple genetic modifications, such as resistance to both glyphosate and glufosinate or to both glyphosate and a herbicide from another class such as ALS inhibitors, HPPD inhibitors, auxinic herbicides, or ACCase inhibitors. These herbicide resistance technologies are, for example, described in Pest Management Science 61, 2005, 246; 61, 2005, 258; 61, 2005, 277; 61, 2005, 269; 61, 2005, 286; 64, 2008, 326; 64, 2008, 332; Weed Science 57, 2009, 108; Australian Journal of Agricultural Research 58, 2007, 708; Science 316, 2007, 1185; and references quoted therein. Several crop plants have been rendered tolerant to herbicides by mutagenesis and conventional methods of breeding, e. g., Clearfield® summer rape (Canola, BASF SE, Germany) being tolerant to imidazolinones, e. g., imazamox, or ExpressSun® sunflowers (DuPont, USA) being tolerant to sulfonyl ureas, e. g., tribenuron. Genetic engineering methods have been used to render crop plants such as soybean, cotton, corn, beets and rape, tolerant to herbicides such as glyphosate, imidazolinones and glufosinate, some of which are under development or commercially available under the brands or trade names RoundupReady® (glyphosate tolerant, Monsanto, USA), Cultivance® (imidazolinone tolerant, BASF SE, Germany) and LibertyLink® (glufosinate tolerant, Bayer CropScience, Germany). Furthermore, crop plants are also covered that are by the use of recombinant DNA techniques capable to synthesize one or more insecticidal proteins, especially those known from the bacterial genus Bacillus, particularly from Bacillus thuringiensis, such as delta-endotoxins, e.g., CryIA(b), CryIA(c), CryIF, CryIF(a2), CryIIA(b), CryIIIA, CryIIIB(b1) or Cry9c; vegetative insecticidal proteins (VIP), e. g., VIP1, VIP2, VIP3 or VIP3A; insecticidal proteins of bacteria colonizing nematodes, e. g., Photorhabdus spp. or Xenorhabdus spp.; toxins produced by animals, such as scorpion toxins, arachnid toxins, wasp toxins, or other insect-specific neurotoxins; toxins produced by fungi, such as Streptomycetes toxins, plant lectins, such as pea or barley lectins; agglutinins; proteinase inhibitors, such as trypsin inhibitors, serine protease inhibitors, patatin, cystatin or papain inhibitors; ribosome-inactivating proteins (RIP), such as ricin, maize-RIP, abrin, luffin, saporin or bryodin; steroid metabolism enzymes, such as 3-hydroxy-steroid oxidase, ecdysteroid-IDP-glycosyl-transferase, cholesterol oxidases, ecdysone inhibitors or HMG-CoA-reductase; ion channel blockers, such as blockers of sodium or calcium channels; juvenile hormone esterase; diuretic hormone receptors (helicokinin receptors); stilbene synthase, bibenzyl synthase, chitinases or glucanases. In the context of the present invention these insecticidal proteins or toxins are to be understood expressly also as including pre-toxins, hybrid proteins, truncated or otherwise modified proteins. Hybrid proteins are characterized by a new combination of protein domains, (see, e. g., WO 02/015701). Further examples of such toxins or genetically modified crop plants capable of synthesizing such toxins are disclosed, e. g., in EP-A 374 753, WO 93/007278, WO 95/34656, EP-A 427 529, EP-A 451 878, WO 03/18810 und WO 03/52073. The methods for producing such genetically modified crop plants are generally known to the person skilled in the art and are described, e. g., in the publications mentioned above. These insecticidal proteins contained in the genetically modified crop plants impart to the crop plants producing these proteins tolerance to harmful pests from all taxonomic groups of arthropods, especially to beetles (Coleoptera), two-winged insects (Diptera), and moths (Lepidoptera) and to nematodes (Nematoda). Genetically modified crop plants capable to synthesize one or more insecticidal proteins are, e. g., described in the publications mentioned above, and some of which are commercially available such as YieldGard® (corn cultivars producing the Cry1Ab toxin), YieldGard® Plus (corn cultivars producing Cry1Ab and Cry3Bb1 toxins), Starlink® (corn cultivars producing the Cry9c toxin), Herculex® RW (corn cultivars producing Cry34Ab1, Cry35Ab1 and the enzyme Phosphinothricin-N-Acetyltransferase [PAT]); NuCOTN® 33B (cotton cultivars producing the Cry1Ac toxin), Bollgard® I (cotton cultivars producing the Cry1Ac toxin), Bollgard® II (cotton cultivars producing Cry1Ac and Cry2Ab2 toxins); VIPCOT® (cotton cultivars producing a VIP-toxin); NewLeaf® (potato cultivars producing the Cry3A toxin); Bt-Xtra®, NatureGard®, KnockOut®, BiteGard®, Protecta®, Bt11 (e. g., Agrisure® CB) and Bt176 from Syngenta Seeds SAS, France, (corn cultivars producing the Cry1Ab toxin and PAT enzyme), MIR604 from Syngenta Seeds SAS, France (corn cultivars producing a modified version of the Cry3A toxin, c.f. WO 03/018810), MON 863 from Monsanto Europe S.A., Belgium (corn cultivars producing the Cry3Bb1 toxin), IPC 531 from Monsanto Europe S.A., Belgium (cotton cultivars producing a modified version of the Cry1Ac toxin) and 1507 from Pioneer Overseas Corporation, Belgium (corn cultivars producing the CrylF toxin and PAT enzyme).
Furthermore, crop plants are also covered that are by the use of recombinant DNA techniques capable to synthesize one or more proteins to increase the resistance or tolerance of those crop plants to bacterial, viral or fungal pathogens. Examples of such proteins are the so-called "pathogenesis-related proteins" (PR proteins, see, e.g., EP-A 392 225), crop plant disease resistance genes (e. g., potato culti-vars, which express resistance genes acting against Phytophthora infestans derived from the Mexican wild potato, Solanum bulbocastanum) or T4-lyso-zym (e.g., potato cultivars capable of synthesizing these proteins with increased resistance against bacteria such as Erwinia amylovora). The methods for producing such genetically modified crop plants are generally known to the person skilled in the art and are described, e.g., in the publications mentioned above.
Furthermore, crop plants are also covered that are by the use of recombinant DNA techniques capable to synthesize one or more proteins to increase the productivity (e.g., biomass production, grain yield, starch content, oil content or protein content), tolerance to drought, salinity or other growth-limiting environmental factors or tolerance to pests and fungal, bacterial or viral pathogens of those crop plants.
Furthermore, crop plants are also covered that contain by the use of recombinant DNA techniques a modified amount of ingredients or new ingredients, specifically to improve human or animal nutrition, e. g., oil crops that produce health-promoting long-chain omega-3 fatty acids or unsaturated omega-9 fatty acids (e. g., Nexera® rape, Dow AgroSciences, Canada).
Furthermore, crop plants are also covered that contain by the use of recombinant DNA techniques a modified amount of ingredients or new ingredients, specifically to improve raw material production, e.g., potatoes that produce increased amounts of amylopectin (e.g. Amflora® potato, BASF SE, Germany).

Furthermore, it has been found that the **microcapsules, or the agrochemical compositions containing the microcapsules** are also suitable for the defoliation and/or desiccation of crop plant parts, of crop plants such as cotton, potato, oilseed rape, sunflower, soybean or field beans, in particular cotton. As desiccants, the compositions according to the invention are suitable in particular for desiccating the above-ground parts of crop plants such as potato, oilseed rape, sunflower and soybean, but also cereals. This enables a fully mechanical harvesting of these important crop plants.
Also of economic interest is the facilitation of harvesting, which is made possible by concentrating within a certain period of time the dehiscence, or reduction of adhesion to the tree, in citrus fruit, olives and other species and varieties of pomaceous fruit, stone fruit and nuts. The same mechanism, i.e. the promotion of the development of abscission tissue between fruit part or leaf part and shoot part of the crop plants is also essential for the controlled defoliation of useful crop plants, in particular cotton.
Moreover, a shortening of the time interval in which the individual cotton crop plants mature leads to an increased fiber quality after harvesting.
Undesired vegetation to be controlled by the uses and methods of the invention are for example economically important monocotyledonous and dicotyledonous harmful plants, such as broad-leaved weeds, weed grasses or Cyperaceae. The active compounds also act efficiently on perennial weeds which produce shoots from rhizomes, root stocks and other perennial organs and which are difficult to control. Specific examples may be mentioned of some representatives of the monocotyledonous and dicotyledonous weed flora which can be controlled by the uses and methods of the invention, without the enumeration being restricted to certain species. Examples of weed species on which the herbicidal compositions act efficiently are, from amongst the monocotyledonous weed species, *Avena spp., Alopecurus spp., Apera spp., Brachiaria spp., Bromus spp., Digitaria spp., Lolium spp., Echinochloa spp., Leptochloa spp., Fimbristylis spp., Panicum spp., Phalaris spp., Poa spp., Setaria spp.* and also *Cyperus* species from the annual group, and, among the perennial species, *Agropyron, Cynodon, Imperata and Sorghum* and also perennial *Cyperus* species. In the case of the dicotyledonous weed species, the spectrum of action extends to genera such as, for example, *Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp., Sida spp., Sinapis spp., Solanum spp., Stellaria spp., Veronica spp. Edipta spp., Sesbania spp., Aeschynomene spp. and Viola spp., Xanthium spp.* among the annuals, and *Convolvulus, Cirsium, Rumex* and *Artemisia* in the case of the perennial weeds. In one embodiment, the undesired vegetation is of the genus *Nasturtium,* preferbly *Nasturtium officinale.*

The invention furthermore relates to the use of the microcapsules for reducing the volatility, or for reducing the leaching behaviour of the pesticide. Reduction of volatility, or reduction of leaching, refers to a reduction compared to a formulation containing non-encapsulated pesticide. Typically, volatility, or leaching is reduced by a factor of 2, preferably by a factor of 5 compared to a formulation containing unencapsulated pesticide. The volatility of a pesticide can be determined by measurement of the vapor pressure of the pesticide according to ASTM E1194-07. Leaching can be determined by measurement of the rain fastness of a formulation, as described in example 5 of EP Appl. N° 14197983.

**Advantages** of the instant application are a reduced evaporation, and leaching of the pesticide compared to the unencapsulated pesticide. Thus, off-target effects are reduced, while the effective application period of the pesticide is extended, resulting in lower application rates and a higher biological activity. The contamination of ground water by the pesticide, as well as adverse effects on soil organisms is avoided. Human health risks during handling of agrochemicals, and spraying of tank mixes are reduced. The amount of organic solvents in the agrochemical formulations can be reduced, as the capsule core comprises water. The capsule shell is biodegradable and thus economically friendly; and the microcapsules can be utilized to encapsulate water-soluble pesticides.

The following examples illustrate the invention and shall not be construed as limiting.

### Examples:

The size of the microcapsules (arithmetic mean, sum of all sizes divided by the number of particles) was determined by optical microscopy (Leica DM 5000 B) and diameter measurements from 3 batches (in each batch 100 capsules were measured). Diameter measurements were conducted with software for scientific image analysis (Leica Application Suite V3.8).

Polymer solution S1: Polymer of 88 equivalents by weight stearyl methacrylate and 12 equivalents by weight methacrylic acid, in the form of a 31.0 wt% solution in C₁₀-C₁₂ isoalkanes.
Aromatic solvent: mixture of aromatic hydrocarbons, aromatic content above 99 wt%, viscosity at 25 ° C of 3.54 mm²/s, density at 15 ° C of 0.994 kg/dm³.
Aliphatic solvent: mixture of C₁₀-C₁₂ isoalkanes, less than 2 wt% of aromatic hydrocarbons. NaOHaq: Solution of sodium hydroxide in water.

### Example 1:

The following premixes 1-3 were prepared:
Premix 1: 36.3 g of aqueous solution of dicamba sodium salt (23 wt%), and 0.7 g of glycerol
Premix 2: 41.72 g of Aromatic solvent, and 10.81 g of Polymer solution S1
Premix 3: 1.54 g of terephthaloyl chloride (TPC) and 13.82 g dibutyl adipate

Synthesis: Premixes 1 and 2 were transferred in a reactor and emulsified using a high shear homogenizer at the speed of 8000 rpm for 5 minutes, thereby obtaining a water-in-oil emulsion (inverse emulsion). Afterwards, at 5000 rpm premix 3 was added over a time period of 5 min.
Then, under stirring by means of a blade stirrer at 200 rpm, the mixture was heated up to 70 ° C and kept at this temperature for 2 hours. Finally, the capsules suspension was cooled down to 20-25 ° C.
The average capsule size (D50) was found to be 3.0 µm by measurement according to the method described above.

### Example 2:

The following premixes 1-3 were prepared:
Premix 1: 35.41 g of aqueous solution of dicamba diglycolamine salt (33.3 wt%), 0.7 g of glycerol, and 2.42 g of 3% NaOHaq.
Premix 2: 41.72 g of Aromatic solvent, and 10.81 g of Polymer Solution S1
Premix 3: 1.54 g of TPC and 13.82 g dibutyl adipate

Synthesis was run according to the procedure described in Example 1.

The average capsule size (D50) was found to be 0,7 µm by measurement according to the method described above.

### Example 3:

The following premixes 1-3 were prepared:
Premix 1: 35.41 g of aqueous solution of dicamba N,N-Bis-(amino propyl) methylamine salt (33.3 wt%), 0.7 g of glycerol, and 2.42 g of 3% NaOHaq.
Premix 2: 41.72 g of Aliphatic solvent, and 10.81 g of Polymer Solution S1
Premix 3: 1.54 g of TPC and 13.82 g dibutyl adipate

Synthesis was run according to the procedure described in Example 1. The average capsule size (D50) was found to be 3,3 µm by measurement according to the method described above.

### Example 4:

The following premixes 1-3 were prepared:
Premix 1: 35.41 g of aqueous solution of dicamba ammonium salt (33.3 wt%), 0.7 g of glycerol, and 2.42 g of 3% NaOHaq.
Premix 2: 41.72 g of Aliphatic solvent, and 10.81 g of Polymer Solution S1
Premix 3: 1.75 g of adipoyl chloride (ADC) and 13.82 g dibutyl adipate

Synthesis was run according to the procedure described in Example 1. The average capsule size (D50) was found to be 2,9 µm by the method described above.

### Example 5:

The following premixes 1-3 were prepared:
Premix 1: 35.41 g of aqueous solution of dicamba ammonium salt (33.3 wt%), 0.7 g of pentaerythritol, and 2.42 g of 3% NaOHaq.
Premix 2: 41.72 g of Aliphatic solvent, and 10.81 g of Polymer Solution S1
Premix 3: 1.75 g of ADC and 13.82 g dibutyl adipate

Synthesis was run according to the procedure described in Example 1. The average capsule size (D50) was found to be 1,8 µm by measurement according to the method described above.

### Example 6:

The following premixes 1-3 were prepared:
Premix 1: 35.41 g of aqueous solution of dicamba diglycolamine salt (33.3 wt%), 1.39 g of glycerol and 2.42 g of 3% NaOHaq.
Premix 2: 28.24 g of Aliphatic solvent, and 10.81 g of Polymer Solution S1
Premix 3: 3.07 g of TPC and 27.64 g dibutyl adipate

Synthesis was run according to the procedure described in Example 1. The average capsule size (D50) was found to be 6,0 µm by measurement according to the method described above.

### Example 7 - not according to the invention:

The following premixes 1-3 were prepared:
Premix 1: 35.41 g of aqueous solution of imazamox sodium salt (33.0 wt%), 0.7 g of glycerol, and 2.42 g of 3% NaOHaq.
Premix 2: 41.72 g of Aliphatic solvent, and 10.81 g of Polymer Solution S1
Premix 3: 1.54 g of TPC and 12.99 g dibutyl adipate

Synthesis was run according to the procedure described in Example 1. The average capsule size (D50) was found to be 4,5 µm by measurement according to the method described above.

### Example 8:

The capsules of Examples 2 and 6 were separately diluted in water to a pesticide concentration of 0.16 g/l. The resulting capsule suspensions CS-2 - containing capsules of Example 2 - and CS-6 - containing capsules of Example 6 - were tested for their biological effectivity in comparison with a 480 g/l solution (SL-1) of the diglycol ammonium salt of dicamba in greenhouse trials on *Nasturtium officinale* R.Br..

Plants were sprayed with CS-2, CS-6, or SL-1 with the application rates given in Table 1. The herbicidal activity was evaluated 14 days after treatment by awarding scores to the treated plants in comparison to the untreated control plants. The evaluation scale ranges from 0% go 100% activity. 100% activity means the complete death of at least those parts of the plant that are above ground. Conversely, 0% activity means that there were no differences between treated and untreated plants.

**Table 1: Biological effectivity**

| Application rate (g/ha) | SL-1* | CS-2 | CS-6 |
|---|---|---|---|
| 1000 | 0% | 20 | 15 |
| 2000 | 8% | 93 | 60 |

| | | | |
|---|---|---|---|
| * Not according to the invention. | | | |

The results displayed in Table 1 demonstrated an increased biological activity of the encapsulated dicamba-salt compared to the unencapsulated dicamba-salt.

## Claims

1. Microcapsules comprising a capsule shell, and a capsule core,
wherein the capsule shell comprises a polyester; and
at least 10 wt% of water based on the total weight of the capsule core,
wherein the capsule core comprises a water-soluble salt of dicamba selected from the sodium salt of dicamba and ammonium salts of dicamba,
wherein the salt of dicamba has a water-solubility of at least 10 g/l at 25 ° C.

2. The microcapsules of claim 1, wherein the salt of dicamba is present in the capsule core in dissolved form.

3. The microcapsules of claim 1 or 2, wherein the polyester comprises in polymerized form
a) an alcohol selected from diols, and polyols; and
b) an acid-component selected from divalent, and multivalent carboxylic acids; and acid halides, acid esters, acid thioesters, and acid anhydrides thereof.

4. The microcapsule of claim 3, wherein the alcohol, and the acid-component independently from one another comprise 2 to 10 C-atoms.

5. The microcapsule according to any of claims 1 to 4, wherein the polyester comprises in polymerized form
a) an alcohol selected from ethylene glycol, 1,2-propanediol, 1,3-propanediol, glycerol, 1,4-butane diol, trimethylolpropane, pentaerythritol, neopentyl glycol, and 1,6-hexane diol; and
b) an acid-component selected from
oxalic acid, malonic acid, succinic acid, glutaric acid, adipic acid, sebacic acid, phthalic acid, and terephthalic acid; and
acid halides, acid esters, acid thioesters, and acid anhydrides thereof.

6. The microcapsules according to any of claims 1 to 5, wherein the core comprises at least 30 wt% of water, and at least 10 wt% of the salt of dicamba, based on the total weight of the capsule core.

7. The microcapsules according to any of claims 1 to 6, having an average particle size of the microcapules in the range from 0.1 to 10 *µ*m.

8. The microcapsule according to any one of claims 1 to 7, wherein the salt of dicamba is selected from methyl ammonium, dimethyl ammonium, triethyl ammonium, triethanol ammonium, diethyl ammonium, diethanol ammonium, isopropyl ammonium, diisopropylethyl ammonium, 2-(2-ammonium ethoxy)ethanol, diglycolammonium, diethylentriammonium, N,N-bis-(3-aminopropyl)methylammonium, or ammonium salts of dicamba.

9. The microcapsule according to any of claims 1 to 7, wherein the salt of dicamba is the N,N-bis-(3-aminopropyl)methylammonium salt of dicamba, or the ammonium salt of dicamba.

10. Process for manufacturing the microcapsules as defined in any of claims 1 to 9, comprising the steps of
a) preparing an inverse emulsion with an aqueous dispersed phase, and a hydrophobic continuous phase, wherein the aqueous dispersed phase comprises an alcohol selected from diols, and polyols, and the salt of dicamba in dissolved form; and
b) subsequently adding an acid-component selected from
divalent and multivalent carboxylic acids; and
acid halides, acid esters, acid thioesters, and acid anhydrides thereof.

12. The process of claim 11, wherein the divalent, or multivalent carboxylic acid in step b) is in the form of an acid halide.

12. A method of controlling undesired insect or mite attack, harmfull fungy, and/or undesired vegetation, and/or for regulating the growth of plants, wherein the microcapsules, as defined in any of claims 1 to 9, are allowed to act on the respective pests, their environment, or the crop plants to be protected from the respective pest, on the soil and/or on the crop plants and/or on their environment.

13. Plant propagation materials comprising the microcapsules as defined in any of claims 1 to 9.

14. Use of the microcapsules as defined in any of claims 1 to 9 for reducing the volatility, or for reducing the leaching behavior of the salt of dicamba as defined in any of claims 1 to 9.

## Patentansprüche

1. Mikrokapseln, umfassend eine Kapselhülle und einen Kapselkern,
wobei die Kapselhülle einen Polyester und mindestens 10 Gew.-% Wasser, bezogen auf das Gesamtgewicht des Kapselkerns, umfasst,
wobei der Kapselkern ein aus dem Natriumsalz von Dicamba und Ammoniumsalzen von Dicamba ausgewähltes wasserlösliches Salz von Dicamba umfasst,
wobei das Salz von Dicamba bei 25°C eine Löslichkeit in Wasser von mindestens 10 g/l aufweist.

2. Mikrokapseln nach Anspruch 1, wobei das Salz von Dicamba im Kapselkern in gelöster Form vorliegt.

3. Mikrokapseln nach Anspruch 1 oder 2, wobei der Polyester in polymerisierter Form
a) einen aus Diolen und Polyolen ausgewählten Alkohol und
b) eine aus zweiwertigen und mehrwertigen Carbonsäuren und Säurehalogeniden, Säureestern, Säurethioestern und Säureanhydriden davon ausgewählte Säurekomponente umfasst.

4. Mikrokapsel nach Anspruch 3, wobei der Alkohol und die Säurekomponente unabhängig voneinander 2 bis 10 C-Atome umfassen.

5. Mikrokapsel nach einem der Ansprüche 1 bis 4, wobei der Polyester in polymerisierter Form
a) einen aus Ethylenglykol, 1,2-Propandiol, 1,3-Propandiol, Glycerin, 1,4-Butandiol, Trimethylolpropan, Pentaerythritol, Neopentylglykol und 1,6-Hexandiol ausgewählten Alkohol und
b) eine aus Oxalsäure, Malonsäure, Bernsteinsäure, Glutarsäure, Adipinsäure, Sebacinsäure, Phthalsäure und Terephthalsäure und Säurehalogeniden, Säureestern, Säurethioestern und Säureanhydriden davon ausgewählte Säurekomponente
umfasst.

6. Mikrokapseln nach einem der Ansprüche 1 bis 5, wobei der Kern mindestens 30 Gew.-% Wasser und mindestens 10 Gew.-% des Salzes von Dicamba, bezogen auf das Gesamtgewicht des Kapselkerns, umfasst.

7. Mikrokapseln nach einem der Ansprüche 1 bis 6 mit einer durchschnittlichen Mikrokapselteilchengröße im Bereich von 0,1 bis 10 µm.

8. Mikrokapsel nach einem der Ansprüche 1 bis 7, wobei das Salz von Dicamba aus Methylammonium-, Dimethylammonium-, Triethylammonium-, Triethanolammonium-, Diethylammonium-, Diethanolammonium-, Isopropylammonium-, Diisopropylethylammonium-, 2-(2-Ammoniumethoxy)-ethanol-, Diglykolammonium-, Diethylentriammonium-, N,N-Bis-(3-aminopropyl)methylammonium- und Ammoniumsalzen von Dicamba ausgewählt ist.

9. Mikrokapsel nach einem der Ansprüche 1 bis 7, wobei es sich bei dem Salz von Dicamba um das N,N-Bis-(3-aminopropyl)methylammoniumsalz von Dicamba oder das Ammoniumsalz von Dicamba handelt.

10. Verfahren zur Herstellung der wie in einem der Ansprüche 1 bis 9 definierten Mikrokapseln, welches die folgenden Schritte umfasst:
a) die Herstellung einer inversen Emulsion mit einer wässrigen dispergierten Phase und einer hydrophoben kontinuierlichen Phase, wobei die wässrige dispergierte Phase einen aus Diolen und Polyolen ausgewählten Alkohol und das Salz von Dicamba in gelöster Form umfasst, und
b) anschließend die Zugabe einer aus zweiwertigen und mehrwertigen Carbonsäuren und Säurehalogeniden, Säureestern, Säurethioestern und Säureanhydriden davon ausgewählten Säurekomponente.

11. Verfahren nach Anspruch 10, wobei die zweiwertige bzw. mehrwertige Carbonsäure in Schritt b) in Form eines Säurehalogenids vorliegt.

12. Verfahren zur Bekämpfung von unerwünschtem Insekten- oder Milbenbefall, schädlichen Pilzen und/oder unerwünschtem Pflanzenwuchs und/oder zur Regulierung des Wachstums von Pflanzen, bei dem man die wie in einem der Ansprüche 1 bis 9 definierten Mikrokapseln auf die betreffenden Schädlinge, ihre Umgebung oder die vor dem betreffenden Schädling zu schützenden Kulturpflanzen, auf den Boden und/oder auf die Kulturpflanzen und/oder auf ihre Umgebung einwirken lässt.

13. Pflanzenfortpflanzungsmaterialien, umfassend die wie in einem der Ansprüche 1 bis 9 definierten Mikrokapseln.

14. Verwendung der wie in einem der Ansprüche 1 bis 9 definierten Mikrokapseln zur Verminderung der Volatilität oder zur Verminderung des Auswaschverhaltens des wie in einem der Ansprüche 1 bis 9 definierten Salzes von Dicamba.

## Revendications

1. Microcapsules comprenant une enveloppe de capsule, et un noyau de capsule,
l'enveloppe de capsule comprenant un polyester ; et
au moins 10 % en poids d'eau sur la base du poids total du noyau de capsule,
le noyau de capsule comprenant un sel hydrosoluble de dicamba choisi parmi le sel de sodium de dicamba et des sels d'ammonium de dicamba,
le sel de dicamba possédant une solubilité dans l'eau d'au moins 10 g/l à 25 °C.

2. Microcapsules selon la revendication 1, le sel de dicamba étant présent dans le noyau de capsule sous forme dissoute.

3. Microcapsules selon la revendication 1 ou 2, le polyester comprenant sous forme polymérisée
a) un alcool choisi parmi des diols, et des polyols ; et
b) un composant de type acide choisi parmi des acides carboxyliques divalents et des acides carboxyliques multivalents ; et des halogénures d'acide, des esters d'acide, des thioesters d'acide, et des anhydrides d'acide correspondants.

4. Microcapsule selon la revendication 3, l'alcool, et le composant de type acide comprenant indépendamment l'un de l'autre 2 à 10 atomes de C.

5. Microcapsule selon l'une quelconque des revendications 1 à 4, le polyester comprenant sous forme polymérisée
a) un alcool choisi parmi l'éthylèneglycol, le 1,2-propanediol, le 1,3-propanediol, le glycérol, le 1,4-butanediol, le triméthylolpropane, le pentaérythritol, le néopentylglycol, et le 1,6-hexanediol ; et
b) un composant de type acide choisi parmi l'acide oxalique, l'acide malonique, l'acide succinique, l'acide glutarique, l'acide adipique, l'acide sébacique, l'acide phtalique, et l'acide téréphtalique ; et
des halogénures d'acide, des esters d'acide, des thioesters d'acide, et des anhydrides d'acide correspondants.

6. Microcapsules selon l'une quelconque des revendications 1 à 5, le noyau comprenant au moins 30 % en poids d'eau, et au moins 10 % en poids du sel de dicamba, sur la base du poids total du noyau de capsule.

7. Microcapsules selon l'une quelconque des revendications 1 à 6, possédant une grosseur moyenne de particule des microcapsules dans la plage de 0,1 à 10 *µ*m.

8. Microcapsule selon l'une quelconque des revendications 1 à 7, le sel de dicamba étant choisi parmi des sels de méthylammonium, de diméthylammonium, de triéthylammonium, de triéthanolammonium, de diéthylammonium, de diéthanolammonium, d'isopropylammonium, de diisopropyléthylammonium, de 2-(2-ammoniuméthoxy) éthanol, de diglycolammonium, de diéthylènetriammonium, de N,N-bis-(3-aminopropyl)méthylammonium, et d'ammonium de dicamba.

9. Microcapsule selon l'une quelconque des revendications 1 à 7, le sel de dicamba étant le sel de N,N-bis-(3-aminopropyl)méthylammonium de dicamba, ou le sel d'ammonium de dicamba.

10. Procédé pour la fabrication des microcapsules telles que définies dans l'une quelconque des revendications 1 à 9, comprenant les étapes de
a) préparation d'une émulsion inverse avec une phase dispersée aqueuse, et une phase continue hydrophobe, la phase dispersée aqueuse comprenant un alcool choisi parmi des diols, et des polyols, et le sel de dicamba sous forme dissoute ; et
b) subséquemment, ajout d'un composant de type acide choisi parmi des acides carboxyliques divalents et des acides carboxyliques multivalents ; et des halogénures d'acide, des esters d'acide, des thioesters d'acide, et des anhydrides d'acide correspondants.

11. Procédé selon la revendication 10, l'acide carboxylique divalent ou multivalent dans l'étape b) étant sous forme d'un halogénure d'acide.

12. Procédé de lutte contre une attaque par un insecte ou une mite indésirable, un champignon nuisible, et/ou de la végétation indésirable, et/ou pour la régulation de la croissance de végétaux, dans lequel on laisse agir les microcapsules, telles que définies dans l'une quelconque des revendications 1 à 9, sur les nuisibles respectifs, leur environnement, ou des végétaux de culture devant être protégés du nuisible respectif, sur le sol et/ou sur les végétaux de culture et/ou sur leur environnement.

13. Matériaux de propagation végétale comprenant les microcapsules telles que définies dans l'une quelconque des revendications 1 à 9.

14. Utilisation des microcapsules telles que définies dans l'une quelconque des revendications 1 à 9 pour la réduction de la volatilité, ou pour la réduction du comportement de lixiviation du sel de dicamba tel que défini dans l'une quelconque des revendications 1 à 9.
